(19)

Europäisches
Patentamt
European
Patent Office
Office européen
des brevets

(11) **EP 2 178 037 A1**

(12) **EUROPEAN PATENT APPLICATION**

(43) Date of publication:
   **21.04.2010 Bulletin 2010/16**

(51) Int Cl.:
   ***G06Q 10/00*** *(2006.01)*

(21) Application number: **09173186.9**

(22) Date of filing: **15.10.2009**

(84) Designated Contracting States:
   **AT BE BG CH CY CZ DE DK EE ES FI FR GB GR
   HR HU IE IS IT LI LT LU LV MC MK MT NL NO PL
   PT RO SE SI SK SM TR**

(30) Priority: **20.10.2008 US 254668**

(71) Applicant: **Honeywell International Inc.
   Morristown, NJ 07962-2245 (US)**

(72) Inventors:
   • **Pirtle, Randall
   Morristown, NJ 07962-2245 (US)**
   • **Subrahmanya, Amarnath
   Morristown, NJ 07962-2245 (US)**
   • **Subramonian, Prakash
   Morristown, NJ 07962-2245 (US)**
   • **Baliga, Sandeep
   Morristown, NJ 07962-2245 (US)**

   • **Sethu, Ramji
   Morristown, NJ 07962-2245 (US)**
   • **Subramani, Somesh
   Morristown, NJ 07962-2245 (US)**
   • **Lall, Nitesh
   Morristown, NJ 07962-2245 (US)**
   • **Krithivasan, Muthukumar
   Morristown, NJ 07962-2245 (US)**
   • **Sicz, Michael
   Morristown, NJ 07962-2245 (US)**
   • **Camp, John
   Morristown, NJ 07962-2245 (US)**

(74) Representative: **Buckley, Guy Julian
   Patent Outsourcing Limited
   1 King Street
   Bakewell
   Derbyshire DE45 1DZ (GB)**

(54) **Product reliability tracking and notification system and method**

(57)   Methods and apparatus are provided for tracking product reliability. A product removal database (106) having removal data stored therein that are associated with one or more products is periodically accessed at a user-specified periodicity. An aircraft flight-hours database (108) having time-in-flight data stored therein that are associated with each product is periodically accessed at the user-specified periodicity. One or more user-selected algorithms are executed, using at least a portion of the periodically accessed removal data, to determine if the criterion for a user-specified reliability parameter is met or not. If it is determined that the criterion for the user-selected reliability parameter is not met, then an alert is transmitted to a preset destination.

*FIG. 1*

**Description**

TECHNICAL FIELD

The present invention generally relates to product reliability tracking and, more particularly to a system and method for determining and tracking product reliability, and for notifying personnel regarding potential product reliability issues.

BACKGROUND

Many markets are demanding that system and product providers have an increased understanding of the reliability of the systems and products the providers design, develop, and sell. As generally understood, reliability relates to the quality of a product or system over time under specified operating conditions. This includes the likelihood that the product or system will operate without breaking down and the likelihood that the product or system will last as long as expected. If there is an understanding of the reliability of the systems, then future failures can likely be anticipated and any downtime associated with correcting the failures can likely be kept to a minimum.

Currently, product reliability engineers address reliability issues using manual processes, and typically only after issues have been spotted. More specifically, product reliability engineers retrieve data for the system or product/LRU (line replaceable unit), and analyze these data to try and understand the reason or reasons for the reliability issues. This understanding may, in some instances, be used to predict future component failures. One problem with this manual process is that it can be a time-consuming, complex, and potentially costly, task. Another problem is that it may not be able to address potential problems until such problems proactively occur. Yet another problem is that design engineers may not be made aware of a problem until a customer calls, which may potentially be too late from a customer service standpoint.

Hence, there is a need for a system and method for determining and tracking product reliability, and for notifying personnel regarding potential product reliability issues.

BRIEF SUMMARY

In one embodiment, and by way of example only, a method of tracking product reliability includes periodically accessing, at a user-selected periodicity, removal data stored in a product removal database and associated with a product. Product where-used data that are stored in a where-used database are periodically accessed at the user-selected periodicity. The product where-used data are associated with at least selected ones of the products for which removal data are stored in the product removal database and are representative of where the at least selected ones of the products are used. Time-in-service data that are stored in an aircraft flight-hours database are periodically accessed. The time-in-service data are associated with each product for which where-used data are stored in the product where-used database. One or more user-selected algorithms are executed using at least a portion of the periodically accessed removal data to determine if a criterion for a user-specified reliability parameter is not met. If it is determined that the criterion for the user-selected reliability parameter is not met, an alert is transmitted to a preset destination.

In another exemplary embodiment, a system for tracking product reliability includes a product removal database, a product where-used database, an aircraft flight-hours database, a user interface, and a processor. The product removal database has removal data stored therein that are associated with a product. The product where-used database has product where-used data stored therein that are associated with at least selected ones of the products for which removal data are stored in the product removal database and are representative of where the at least selected ones of the products are used. The aircraft flight-hours database has time-in-service data stored therein that are associated with each product for which where-used data are stored in the product where-used database. The user interface is configured to receive user input and supply user input commands. The processor is in operable communication with the product removal database, the where-used database, and the aircraft flight-hours database, and is configured to periodically access, at a user-selected periodicity, removal data stored in the product removal database, periodically access, at the user-selected periodicity, product where-used data stored in the where-used database, periodically access, at the user-selected periodicity, time-in-service data stored in the aircraft flight-hours database, execute one or more user-selected algorithms, using at least a portion of the periodically accessed removal data and the periodically accessed time-in-flight data, to determine a reliability-related criterion for the product line, compare the determined reliability-related parameter to a user-selected criterion, and transmit an alert to a preset destination if the determined reliability-related criterion does not meet the user-selected criterion.

In yet another exemplary embodiment, a method of alerting a user of a potential product reliability issue includes periodically determining, at a user-selected periodicity, if removal data that are associated with a product line and are stored in a product removal database include a user-selected keyword. An alert is transmitted to a preset destination if any of the removal data include the user-selected keyword.

BRIEF DESCRIPTION OF THE DRAWINGS

The present invention will hereinafter be described in conjunction with the following drawing figures, wherein like numerals denote like elements, and

FIG. 1 is a functional block diagram of a system that may be used to implement embodiments of the present invention;

FIG. 2 depicts an exemplary process, in flowchart form, that may be implemented by the exemplary system of FIG. 1;

FIG. 3 depicts an exemplary user interface screen that may be displayed to a user for customizing the general process depicted in FIG. 2;

FIGS. 4-20 depict various portions of the exemplary user interface screen of FIG. 3; and

FIGS. 21-34 depict various report charts that may be generated by the system of FIG. 1 when implementing the process of FIG. 2.

DETAILED DESCRIPTION

The following detailed description is merely exemplary in nature and is not intended to limit the invention or the application and uses of the invention. Furthermore, there is no intention to be bound by any theory presented in the preceding background or the following detailed description.

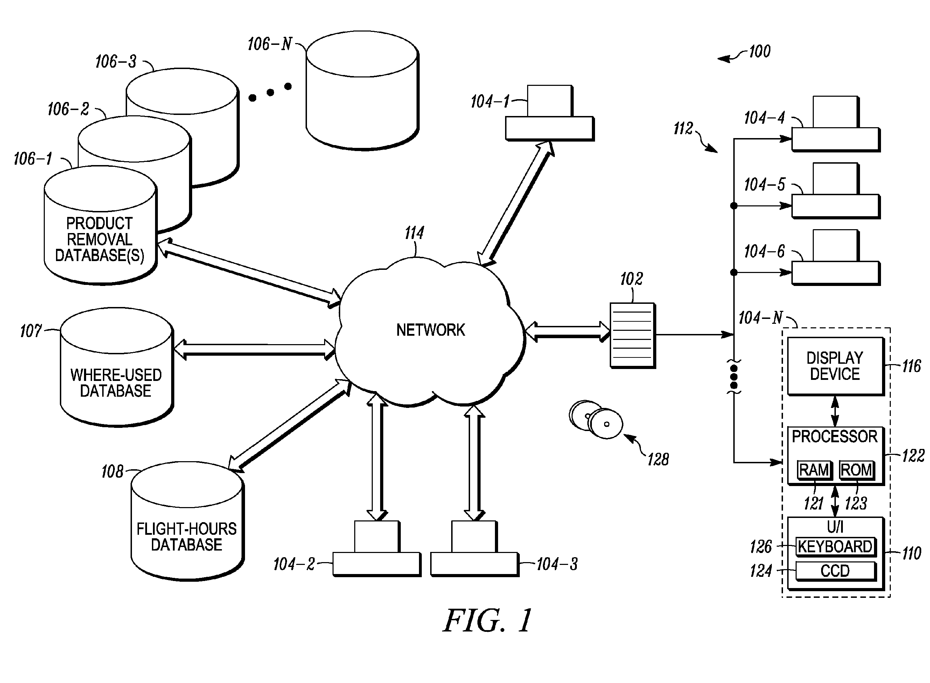

A product reliability tracking and notification system 100 that may be used to implement product reliability tracking and notification methodologies described herein is depicted in FIG. 1, and includes one or more server computer 102, a plurality of user computers 104 (e.g., 104-1, 104-2, 104-3, ... 104-N), one or more product removal database 106 (e.g., 106-1, 106-2, 106-3, ... 106-N), one or more where-used databases 107 (only one shown), and an aircraft flight-hours database 108. In the depicted embodiment, only a single server computer 102 is depicted. It will be appreciated that this is done merely for clarity, and that the system 100 could be implemented with a plurality of server computers 102. It will additionally be appreciated that if the system 100 is implemented with a plurality of server computers 102, each of the server computers 102 could be collocated, or one or more of the server computers 102 could be remotely located from each other. In any case, each server computer 102 has software loaded thereon, or is accessible to software loaded in non-illustrated external memory, that implements at least a portion of the product reliability tracking and notification methodology described further below and that allows each, or at least selected ones, of the user computers 104 to interact with the software to implement at least a portion of this methodology.

The user computers 104 are in operable communication with the server computer 102 either via a local network 112 or a wide area distributed network 114, such as a secure intranet, the Internet, or the World Wide Web. In either case, the user computers 104 are also in operable communication with the product removal databases 106 and the flight-hours database 108, either via the server computer 102 and local network 112 or via the distributed network 114.

Before proceeding further, it is noted that the software that is used to implement the methodology that will be described further below could be installed on individual ones of the user computers 104, if needed or desired. In this regard, it will be appreciated that the system 100 could be implemented without the server computer(s) 102, or that one or more of the user computers 104 could implement the methodology without having to access software on a server computer 102. In any case, for completeness of description, a brief discussion of an exemplary device that may be used to implement a user computer 104 will now be provided.

In the depicted embodiment, each of the user computers 104 includes a display device 116, a user interface 118, and a processor 122. The display device 118 is in operable communication with the processor 122 and, in response to display commands received therefrom, displays various images. It will be appreciated that the display device 116 may be any one of numerous known displays suitable for rendering graphic, icon, and/or textual images in a format viewable by a user. Non-limiting examples of such displays include various cathode ray tube (CRT) displays, and various flat panel displays such as, for example, various types of LCD (liquid crystal display) and TFT (thin film transistor) displays. The display device 116 may additionally be based on a panel mounted display, a head up display (HUD) projection, or any known technology.

The user interface 118 is in operable communication with the processor 122 and is configured to receive input from a user and, in response to the user input, supply various signals to the processor 122. The user interface 118 may be any one, or combination, of various known user interface devices including, but not limited to, a cursor control device (CCD), such as a mouse, a trackball, or joystick, and/or a keyboard, one or more buttons, switches, or knobs. In the depicted embodiment, the user interface 118 includes a CCD 124 and a keyboard 126. A user may use the CCD 124 to, among other things, move a cursor symbol over, and select, various items rendered on the display device 116, and may use the keyboard 122 to, among other things, input various data. A more detailed description of the why a user may select various rendered items with the CCD 124, and the various data that a user may input is provided further below.

The processor 122 is in operable communication with the display device 116 and the user interface 118 via one or more non-illustrated cables and/or busses, and is in operable communication with the server computer 102 via the local area network 112 or the distributed network 114. The processor 122 is configured to be responsive to user input supplied to the user interface 118 to, among other things, selectively interact with the server computer 102, and to command the display device 116 to render various graphical user interface tools, associate data that are input via the user interface 118 with component parts that are also input or selected via the user interface 118, and to set up dynamic alerts for the inputted or selected component parts.

The processor 122 may include one or more microprocessors, each of which may be any one of numerous known general-purpose microprocessors or application specific processors that operate in response to program instructions. In the depicted embodiment, the processor 122 includes on-board RAM (random access memory) 121, and on-board ROM (read only memory) 123. The program instructions that control the processor 122 may be stored in either or both the RAM 121 and the ROM 123, or on a non-illustrated local hard drive. It will be appreciated that this is merely exemplary of one scheme for storing operating system software and software routines, and that various other storage schemes may be implemented. It will also be appreciated that the processor 122 may be implemented using various other circuits, not just one or more programmable processors. For example, digital logic circuits and analog signal processing circuits could also be used.

The product removal databases 106 preferably have various removal data stored therein that are associated with a plurality of products. It will be appreciated that, although the product removal databases 106 are, for clarity and convenience, shown as being stored separate from the main server 102, all or portions of these databases 106 could be loaded onto the main server 102. Moreover, the product removal databases 106, or the data forming portions thereof, could also be part of one or more non-illustrated devices or systems that are physically separate from the depicted system 100. It will additionally be appreciated that the amount and type of data that comprise the product removal databases 106 may vary. Preferably, the product removal databases 106 are configured to include a plurality of data fields associated with each product, which may include customer-supplied data fields. Some non-limiting examples of such data fields include a part number field, a part description field, a part serial number field, a repair facility name field, a component owner/operator name field, a removal type description field, an evaluation result description field, a return type description field, a reason for removal field, time since new, installation dates, and an analyst comments field, just to name a few.

The product where-used database 107 preferably has data stored therein that are representative of where at least selected ones of the product lines in the product removal database 106 are used. More specifically, these data indicate a particular aircraft, engine, auxiliary power unit (APU), and quantity used per aircraft, just to name a few. It is noted that time-in-flight data are retrieved from the flight-hours database 108 based on the where-used data associated with a selected part number(s).

The flight-hours database 108, as the nomenclature used herein connotes, preferably has data stored therein that are representative of time-in-flight data for at least selected ones of the product lines in the product removal database 106. As with the product removal database 106, it will be appreciated that, although the flight-hours database 108 is, for clarity and convenience, shown as being stored separate from the main server 102, all or portions of this database 108 could be loaded onto the main server 102. Moreover, the flight-hours database 108, or the data forming portions thereof, could also be part of one or more non-illustrated devices or systems that are physically separate from the depicted system 100. In one particular embodiment, the time-in-flight data may data that are processed after being automatically and periodically retrieved from, for example, the generally well-known ACAS (AirCraft and fleet Analytical System) database. Alternatively, these data may be input manually or retrieved periodically and/or automatically from other suitable data sources.

The system 100 described above and depicted in FIG. 1 implements a product reliability tracking and notification method. More specifically, it implements a method that selectively implements one or more dynamic alert algorithms for various user-selected products. In one embodiment, the system 100 implements a method that selectively implements one or more user-selected algorithms, by accessing removal data stored in the product removal database 106 and, in some instances, accessing time-in-flight data stored in the aircraft flight-hours database 108, to determine if one or more criteria for a user-specified reliability parameter for the various user-specified products is or is not met. If the a criterion for the user-specified reliability parameter is not met, an alert is transmitted to user-selected ones of the user computers 104.

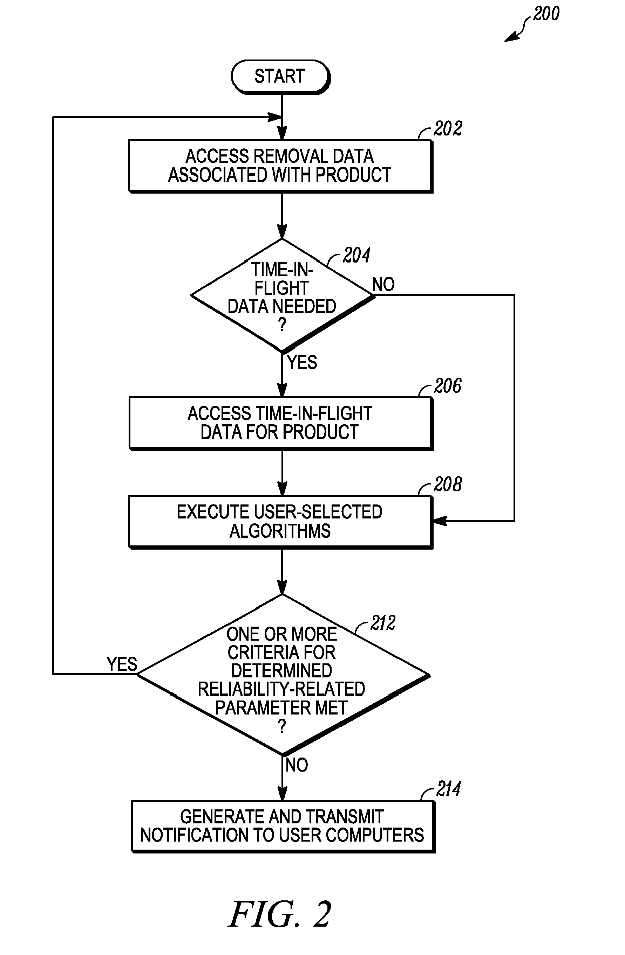

The overall process 200 by which the system 100 implements this methodology is depicted in flowchart form in FIG. 2, and with reference thereto will now be described in more detail. Before doing so, however, it is noted that the depicted process 200 is merely exemplary of any one of numerous ways of depicting and implementing the overall process to be described. Moreover, the process 200 that is implemented by the system 100 may be a software driven process that is stored, in whole or in part, on one or more computer-readable media, such as the media 128 depicted in FIG. 1. It will additionally be appreciated that the software may be stored, in whole or in part, in one or more non-illustrated memory devices and/or the server computer 102 and/or one or more of the user computers 104. With this background in mind, it is additionally noted that the numerical parenthetical references in the following description refer to like steps in the flowchart depicted in FIG. 2.

The server computer 102 (and/or one or more user computers 104), upon initiating the process 200, accesses removal data associated with a product line via the product removal database 106 (202). Preferably, these removal data are accessed periodically and at a user-selected periodicity. Depending on whether or not time-in-flight data are needed (204), the server computer 102 (and/or one or more user computers 104) may also access time-in-flight data via the aircraft flight-hours database 108 (206). As noted above, time-in-flight data are retrieved based on product where-used data associated with a product line. It will be appreciated that the time-in-flight data that are accessed are associated with the where-used details each product for which removal data are accessed. Moreover, these data are also accessed periodically, if needed, at the user-selected periodicity.

Upon accessing the removal data and, if needed, the time-in-flight data for a product, the server computer 102 (and/or one or more user computers 104) executes one or more user-selected algorithms using at least a portion of the periodically accessed data (208). As may be appreciated, the user-selected algorithms determine a reliability-related parameter for the product. The particular reliability-related parameter(s) may vary depending, for example, on the particular algorithm(s) being executed. Although various algorithms may be included for selection by a user, in the depicted embodiment the algorithms include various mean time before failure (MTBX) algorithms, a Crow-AMSAA estimated beta (β) algorithm, various Pareto trend chart generation algorithms, and a keyword search algorithm. Specific embodiments of each of these algorithms are described in more detail further below.

No matter the specific user-selected algorithm(s) that is(are) executed, a determination is made as to whether one or more criteria for determined reliability-related parameter(s) is(are) met for a user-selected threshold (212). If not, then the process 200 repeats for the same, or different, product for the next periodicity. If, however, one or more criteria for reliability-related parameter(s) is(are) not met, the server computer 102 (and/or one or more user computers 104) generates and transmits an alert to one or more preset destinations (214). It will be appreciated that the type of alert that is generated and transmitted may vary, but in a particular preferred embodiment an electronic mail (e-mail) message is sent to one or more preset user e-mail addresses to notify appropriate users of a potential product reliability issue. The server computer 102 (and/or one or more user computers 104) may also automatically or selectively generate one or more reports.

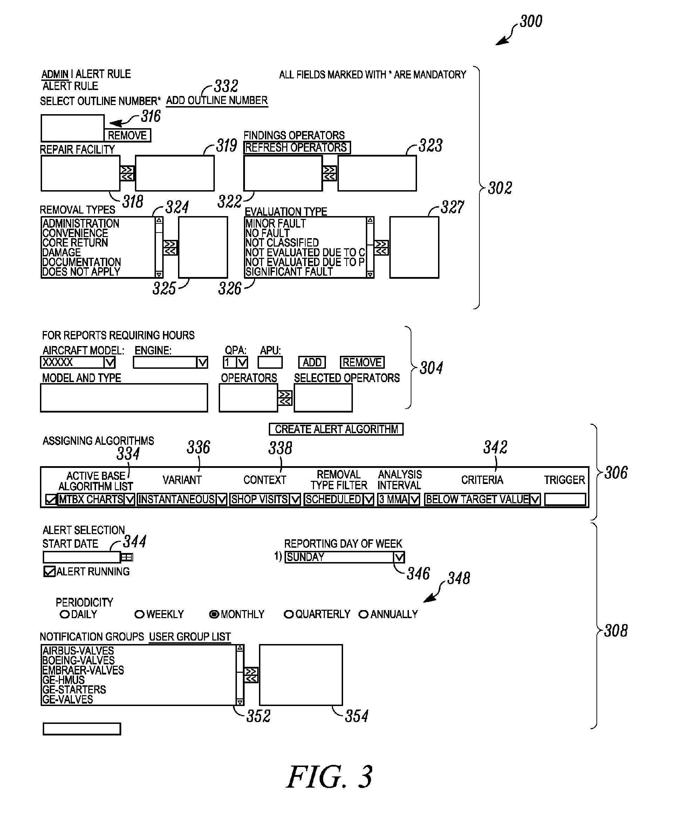

In addition to the above, the system 100 implements a process whereby a user, via one or more of the user computers 104, may customize the above-described product reliability tracking and notification method 200 for particular products. For completeness, an exemplary embodiment of this process will now be described. In doing so, reference should initially be made to FIG. 3, which depicts an exemplary screen shot of at least a portion of a user interface screen that is displayed to a user on a user computer display device 116 when an appropriate command is entered, or when an appropriate hyperlink is selected from a separate, non-illustrated user interface page.

The depicted user interface screen 300 includes various sections, with each section including various data entry fields. In the depicted embodiment the user interface screen 300 includes an Alert Rule section 302, a For Reports Requiring Hours section 304, an Assigning Algorithms section 306, and an Alert Selection section 308. It will be appreciated that this is merely exemplary of a particular user interface screen 300 configuration, and that in other embodiments the user interface screen 300 may include various other arrangements, numbers, and types of sections. Moreover, some data entry fields associated within some of the sections of the depicted embodiment are not depicted or further described, as these fields are not needed to enable or describe the invention encompassed by the claims.

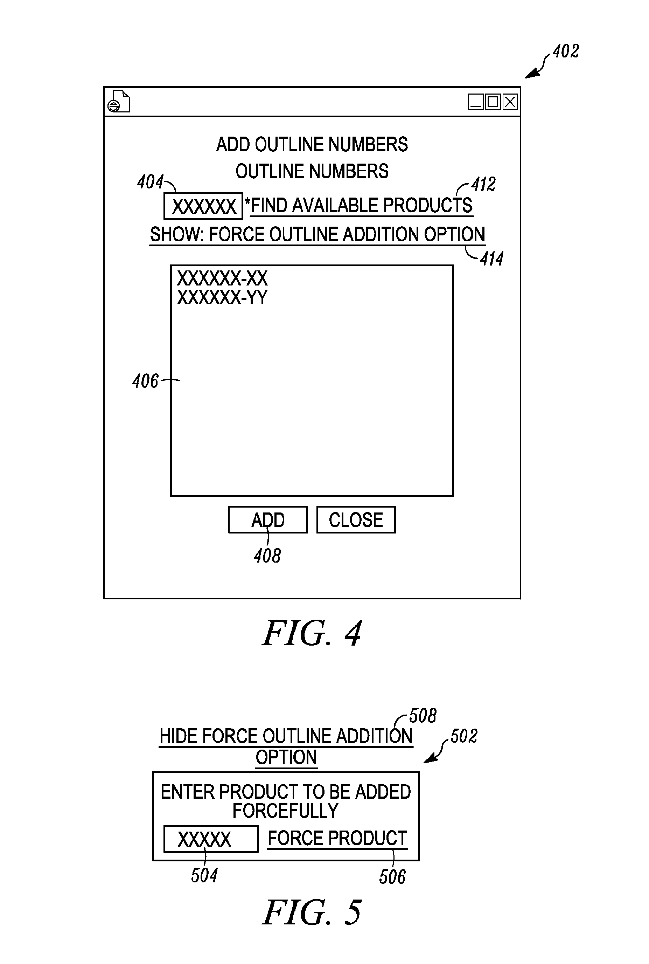

The Alert Rule section 302 is used to enter product specific data for a particular product of interest. In the depicted embodiment, the Alert Rule section 302 includes at least a Select Outline Number field 316, a Repair Facility field 318, a selected Repair facility field 319, a Findings Operator field 322, a selected Findings Operator field 323, a Removal Type field 324, a selected Removal Type field 325, an Evaluation Type field 326, and a selected Evaluation Type field 327. The Select Outline Number field 316 allows a user to select an outline part number for a product interest. In the depicted embodiment, this may be accomplished by selecting an appropriately titled link 332 (e.g., "Add Outline Number"), which will cause a pop-up window 402, such as the one depicted in FIG. 4, to be rendered on the display device 116. Using the pop-up window 402, the user may enter a base part number, or portion thereof, in a base part number entry field 404. As FIG. 4 additionally depicts, all of the part numbers associated with this base part number are then displayed in a part number field 406. The user may then highlight, using the user interface 118, one or more of the part numbers displayed in the part number field 406, and then select the highlighted part numbers using the user interface 118 and a displayed Add button 408.

With continued reference to FIG. 4, the depicted pop-up window 402 additionally includes a Find Available Products link 412 and a Force Outline addition option link 414. If the Find Available Products link 412 is selected, a search of a non-illustrated part number database will be conducted using the base part number entered in the base part number entry field 404. All of the part numbers associated with the base part number are then automatically displayed in the part number field 406. If the Force Outline addition option link 414 is selected, another box 502, which is depicted in FIG. 5, is displayed. This box 502 includes an entry field 504 in which a user may enter a part number that is not stored in the part number database (e.g., one of the removal databases 106). The user may place the part number that was entered in the entry field 504 into the part number field 406 by selecting a Force Product link 506 using the user interface 118. Thereafter, the box 502 may be hidden by selecting a Hide: Force Outline addition option link 508 using the user interface 118.

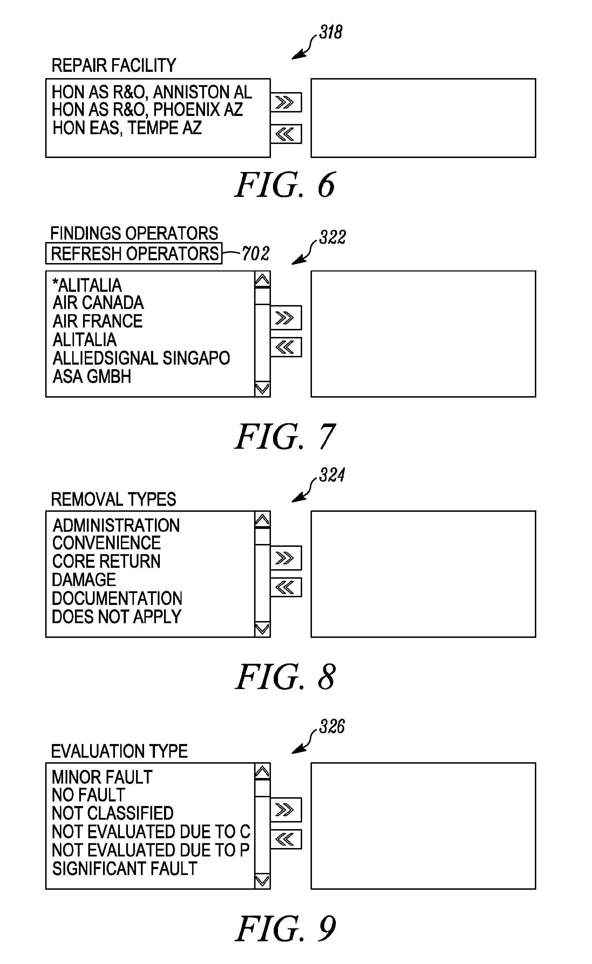

The Repair Facility field 318 allows a user to select one or more facilities where a repair and overhaul action for the selected part number (or numbers) may be carried out. Preferably, and as FIG. 6 depicts, when one or more part numbers are selected, all of the repair facilities for the selected part number (or numbers) are automatically displayed in the Repair Facility field 316. The user may then select one or more of the repair facilities from the displayed list by selecting the double arrow (>>) button using the user interface 118. This will list the selected repair facility(ies) in the Selected repair facilities field 319. The user may also de-select one or more of the repair facilities in the selected Repair Facilities field 319 by highlighting one or more of them and then selecting the backward double arrow (<<) button using the user interface 118. In some embodiments, if the user does not select any of the displayed repair facilities, the system defaults to selecting all of the displayed repair facilities.

The Findings Operators field 322 is used to indicate the entity (e.g., the operator) that owns the product associated with the selected part number(s). Preferably, and as FIG. 7 depicts, when one or more part numbers are selected, all of the potential operators associated with the selected product are automatically listed in the Findings Operators field 322. The user may then select one or more of the operators from the displayed list by highlighting one or more of the listed operators and selecting the double arrow (>>) button using the user interface 118. This will list the selected operators in the selected Findings Operators facilities field 323. The user may also de-select one or more of the operators in the selected Findings Operators field 323 by highlighting one or more of them and then selecting the backward double arrow (<<) button using the user interface 118. In some embodiments, if the user does not select any of the displayed operators, the system defaults to selecting all of the displayed operators. Moreover, in some embodiments, such as the one depicted in FIG. 7, if a subset of the listed operators is highlighted and selected, the list of operators may be refreshed by selecting a "REFRESH" button 702 using the user interface 118.

The Removal Type field 324 is used to indicate the reason that the particular part associated with the selected part number was removed from service and shipped to the repair and overhaul facility. Preferably, and as FIG. 8 depicts, when one or more part numbers are selected, a listing of the removal types that a technician (or other repair and overhaul facility personnel) may enter into the removal database are automatically listed in the Removal Type field 324. The user may then select one or more of the removal types from the displayed list by highlighting one or more of the listed operators and selecting the double arrow (>>) button using the user interface 118. This will list the selected removal types in the selected Removal Types field 325. The user may also de-select one or more of the removal types in the selected Removal Types field 325 by highlighting one or more of them and then selecting the backward double arrow (<<) button using the user interface 118. Similar to various other fields, in some embodiments, if the user does not select any of the displayed removal types, the system defaults to selecting all of the removal types. It will be appreciated that the removal types depicted in FIG. 7 are merely exemplary and are additionally only a subset of the removal types that may be included.

The Evaluation Type data field 326 is used to indicate a high level classification of the outcome of the test/ evaluation process conducted on the product associated with the selected part number(s). In particular, this field 326 is used to indicate whether the product associated with the selected part number(s) was evaluated for the existence of a failure and, if so, the relative severity of the evaluation. Preferably, and as FIG. 9 depicts, when one or more part numbers are selected, a listing of the evaluation types that a technician (or other repair and overhaul facility personnel) may enter into the removal database are automatically listed in the Evaluation Type field 326. The user may then select one or more of the evaluation types from the displayed list by highlighting one or more of the listed evaluation types and selecting the double arrow (>>) button using the user interface 118. This will list the selected evaluation types in the selected Evaluation Types field 327. The user may also de-select one or more of the evaluation types in the selected Evaluation Types field 327 by highlighting one or more of them and then selecting the backward double arrow (<<) button using the user interface 118. Similar to various other fields, in some embodiments, if the user does not select any of the displayed removal types, the system defaults to selecting all of the evaluation types. It will be appreciated that the evaluation types depicted in FIG. 7 are merely exemplary and are additionally only a subset of the evaluation types that may be included.

As noted above, the Alert Rule section 302 of the user interface screen 300 may include other data fields. These other data fields, if included, are optional in nature, and are not needed to execute any of the previously mentioned algorithms. As such these will not be further described. Instead, the remaining sections 304-314 of the user interface screen 300 will now be described.

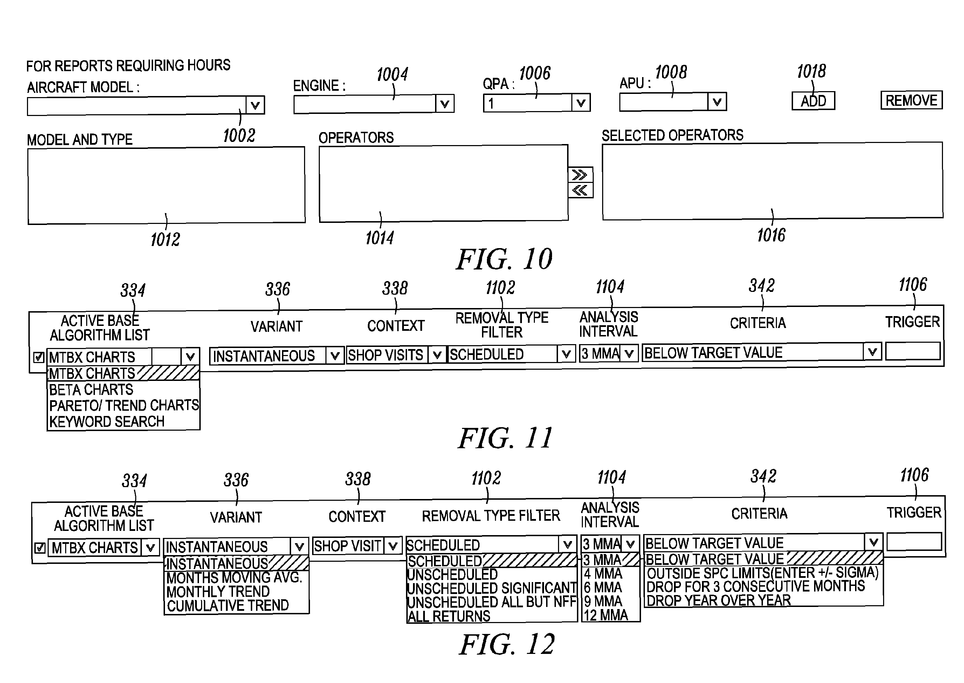

The Reports Requiring Hours section 304 of the user interface screen 300 includes a plurality of data fields, and is used whenever the user is interested in implementing one or more algorithms that rely on aircraft flight hours. The data fields, as shown most clearly in FIG. 10, include an Aircraft Model drop-down field 1002, an Engine drop-down field 1004, a QPA (quantity per aircraft) drop-down field 1006, an APU (auxiliary power unit) field 1008, a Model and Type field 1012, an Operators field 1014, and a Selected Operators field 1016. The Aircraft Model drop-down field 1002 lists each of the aircraft models within which the product associated with the selected part number(s) is installed. Similarly, the Engine drop-down field 1004 lists each of the engine types within which the product associated with the selected part number(s) is installed. The QPA drop-down field 1006 lists the quantity of the product per aircraft, and the APU field 1008 is used to enter the ratio of APU hours to aircraft hours for the product.

When an aircraft model and engine type, which are stored in the where-used database 107, are selected from the Aircraft Model drop-down field 1002 and the Engine drop-down field 1004, respectively, the Model and Type field 1012 is auto-populated with associated aircraft type(s). The user may then highlight, using the user interface 118, one or more of the aircraft types displayed in the Model and Type field 1012, and then select the highlighted aircraft type(s) using the user interface 118 and a displayed Add button 1018. In response, the Operator field 1014 will be auto-populated with all associated operators. The user may then select one or more of the operators from the displayed list by highlighting one or more of the listed operators and selecting the double arrow (>>) button using the user interface 118. This will list the selected operator(s) in the Selected Operators field 1016. It is noted that the user may delete one or more of the aircraft types by highlighting them, and then selecting a displayed Remove button 1022. The user may also de-select one or more of the operators in the Selected Operators field 1016 by highlighting one or more of them and then selecting the backward double arrow (<<) button using the user interface 118.

Returning once again to FIG. 3, the next section displayed on the user interface screen 300 will now be described. This section, which is referred to herein as the Assigning Algorithms section 306, is used to select desired variants of the previously mentioned algorithms, and to associate particular filter parameters to the selected algorithm variant(s). Although the specific schema for doing so may vary, in the depicted embodiment the Assigning Algorithm section 306 is implemented with, what are referred to herein as, an Active Base Algorithm List drop-down field 334, a Variant drop-down field 336, a Context drop-down field 338, and a Criteria drop-down field 342. Moreover, and as will become clearer when described in more detail further below, depending upon the base algorithm that is selected using the Active Base Algorithm List drop-down field 334, the Assigning Algorithm section 306 may be displayed with one or more of what are referred to herein as a Removal Type Filter drop-down field, an Analysis Interval drop-down field, a NC Desc/No of Top drop-down field, and a Trigger field.

As shown most clearly in FIG. 11, the Active Base Algorithm List drop-down field 334 lists each of the general algorithms that may be implemented for the product associated with the selected part number(s). As noted above, these algorithms include mean time between failure (MTBX) algorithms, a Crow-AMSAA estimated beta ($\beta$) algorithm, various Pareto trend chart generation algorithms, and a keyword search algorithm. In the depicted embodiment it is seen that these algorithms are referenced using the terms MTBX Charts, Beta Charts, Pareto/Trend Charts, and Keyword Search. After a user selects one of the listed algorithms, a specific variant (if available) of the selected algorithm may be selected from the Variant drop-down field 336. Moreover, depending on the selected algorithm variant, the user may set one or more filter parameters for the selected algorithm variant using the Context drop-down field 338, and one or more of the above-mentioned Removal Type Filter drop-down field, the Analysis Interval drop-down field, the NC Desc/No of Top drop-down field, and the Trigger field. It is noted that for each of the selectable algorithms, except the Keyword Search algorithm, the Trigger field is displayed. The user enters a value into this field that is related to the criteria (or criterion) set in the Criteria drop-down field 342. The value entered into the Trigger field is the user-selected threshold that was described above, which is used to determine whether a notification alert is generated and transmitted to one or more preset destinations. For the Keyword Search algorithm, it is the criteria (or criterion) set in the Criteria drop-down field 342 that is the above-described user-selected threshold. A detailed description of each of the fields that comprise the Assigning Algorithms section 306 for each specific algorithm and algorithm variant will be provided further below. Before doing so, however, the remaining section displayed on the user interface screen 300 will be described.

Referring once again to FIG. 3, the remaining section displayed on the user interface screen 300 is the Alert Selection section 308. The Alert Selection section 308 includes a Start Date field 344, a Reporting Day of Week field 346, a Periodicity selection field 348, a Notification Groups field 352, and a selected notification groups field 354. The Start Date field 344 is used to set the date from which the analysis will be tracked. As will be described in more detail below, except for keyword searching, the analysis will start 12 months prior to the start date. The Reporting Day of Week field 346, at least in the depicted embodiment, is implemented as a drop-down field. No matter its specific implementation, however, it allows a user to specify the day of the week that the results of the algorithm variant selected in the Assigning Algorithms section 306 will be reported.

The Periodicity selection field 348 allows a user to set the periodicity at which the selected algorithm variant will be conducted. Although the periodicities made available to users may vary from embodiment to embodiment, in the depicted embodiment the periodicities include daily, weekly, monthly, quarterly, and annually. Moreover, the schema that is used to allow users to set a desired periodicity may vary. In the depicted embodiment, the schema is implemented using radio buttons, one each for each of the selectable periodicities.

The Notification Groups field 352 lists potential groups, using predetermined nomenclature, which may be selected to receive an alert when one is generated and transmitted. Preferably, though not necessarily, this field is automatically populated when the part number(s) is(are) selected. In any case, a user may select one or more of the listed groups from the displayed list by highlighting one or more of the listed groups and selecting the double arrow (>>) button using the user interface 118. This will list the selected group(s) in the selected notification groups field 354. The user may also de-select one or more of the groups in the selected notification groups field 354 by highlighting one or more of them and then selecting the backward double arrow (<<) button using the user interface 118.

Having described each of the sections displayed the user interface screen 300, a more detailed description the fields that comprise the Assigning Algorithms section 306, which were not previously described, will now be described. In doing so, each of the variants of the selectable base algorithms (e.g., MTBX Charts, Beta Charts, Pareto/Trend Charts, Keyword Search) will each be described, beginning with the variants of the MTBX Charts algorithm. As FIG. 12 depicts, there are four selectable variants of the MTBX Charts algorithm, which are automatically displayable in the Variant drop-down field 336 when the MTBX Charts algorithm is selected in the Active Base Algorithm List field 334. Each of these algorithm variants in turn have variants, based on selections made in the Removal Type Filter field 1102, the Analysis Interval field 1104, and the Criteria field 342. The MTBX Charts algorithm variants include an "Instantaneous" variant, a "Months Moving Avg" variant, a "Monthly Trend" variant, and a "Cumulative Trend" variant.

Before proceeding further, it is noted that the MTBX Charts variants and the Beta Charts variants, at least in the depicted embodiment, may be based on the generally well-known Crow-AMSAA statistical model. Hence, for completeness, a brief discussion of the Crow-AMSAA model will be provided before each of the variants associated with the selectable algorithms is described.

The Crow-AMSAA model is a statistical model that may be used to predict failures of components in mechanical systems, such as aerospace components. If the Crow-AMSAA model applies, as represented by Equation 1 below, then the log of cumulative failure events $n(t)$ versus log cumulative time ($t$) is linear:

$$n(t) = \lambda t^{\beta} \qquad\qquad \text{(Eq. 1)}.$$

The variable beta (β) is a parameter that determines the "growth rate" of failures. It is sometimes referred to as the "shape" parameter, due to its influence on the basic shape of the graph of Equation 1. If beta is relatively large, this indicates that failures are increasing disproportionately with time, which may signal a potential problem. The variable lambda (λ) is a scale parameter that determines the magnitude of the failures, and is often referred to as the "size" parameter.

The skilled artisan will appreciate that taking the natural log of both sides of Equation (1) yields Equation (2):

$$\ln n(t) = \ln \lambda + \beta \ln t \qquad\qquad \text{(Eq. 2)}.$$

The skilled artisan will additionally appreciate that Equation (2) is a straight-line function, if it is plotted on a log scale, and that the size parameter (λ) is the y-intercept when $t=1$ unit, and the shape parameter (β) is the slope.

Another parameter associated with the Crow-AMSAA model is what is known as "the model intensity function." The model intensity function (ρ($t$)), as shown below in Equation (3), is the first derivative of Equation (1), and measures the instantaneous failure rate at each cumulative test time point:

$$\rho(t) = \frac{dn(t)}{dt} = \frac{d\left(\lambda t^{\beta}\right)}{dt}$$

$$\rho(t) = \lambda \beta t^{\beta - 1} \qquad\qquad \text{(Eq. 3)}.$$

The reciprocal of the model intensity function (e.g., *1/ρ(t))* is the instantaneous MTBX. Thus, the instantaneous MTBX (iMTBX) may be represented as shown below by Equation (4):

$$\text{iMTBX} = \frac{1}{\lambda\beta t^{\beta-1}}$$

$$\text{(Eq. 4).}$$

From the above, it may be appreciated that the relative failure rate of a component, system, or subsystem may be determined from the relative value of β. Specifically, if β is greater than one, this indicates that failure rate is increasing and that the failures will recur relatively more rapidly. This would mean that the MTBX is decreasing over time and the cumulative MTBX is greater than the instantaneous MTBX. If β is less than one, this indicates that failure rate decreasing, which would indicate that failures will come more slowly and lead to increased reliability. This would mean that the MTBX is increasing over time and the cumulative MTBX is less than the instantaneous MTBX. If β is equal to one, this indicates the failure rate is constant. This would mean that the MTBX is not changing over time and therefore the cumulative MTBX is equal to the instantaneous MTBX.

As alluded to above, the Crow-AMSAA λ value is the y-intercept of Equation 2, and can be estimated from the value of $n(t)$ at $t$=1 unit. Moreover, the β value can be estimated by calculating the slope (e.g., the rise over run) of the line. Various methods of estimating the λ and β values are available. Two of the available methods are a linear regression method and a Maximum Likelihood Estimation (MLE) method. To implement the linear regression method, the data are first plotted on the logarithmic scale, with cumulative events on the y-axis and cumulative time on the x-axis. Then, using well-known linear regression analysis, a best-ft line is used to represent the data. The MLE method is generally used with interval or grouped data, in which the β value is estimated by finding a β value that satisfies Equation (5) below:

$$\sum_{i=1}^{k} N_i \left[ \frac{t_i^{\beta} \ln t_i - t_{i-1}^{\beta} \ln t_{i-1}}{t_i^{\beta} - t_{i-1}^{\beta}} - \ln t_k \right] = 0$$

$$\text{(Eq. 5)}$$

where, $t_i$ = time at the $i^{th}$ interval, and $t_k$ = total time (last interval time). The solution for β can be obtained using the well-known Newton-Raphson method, which is an iterative process to approach a root of a function. The specific root that the process locates will depend on the initial, arbitrarily chosen x-value. In any case, the λ value may then be estimated from Equation (6) below.

$$\lambda = \frac{\sum_{i=1}^{k} N_i}{t_k^{\beta}}$$

$$\text{(Eq. 6).}$$

With the above background in mind, the variants of the selectable base algorithms will now be described, beginning with the MTBX Charts variants.

Referring again to FIG. 12, the Instantaneous variant (e.g., instantaneous MTBX), when selected, determines the average time-between-failure in a given time interval. For example, if 4 removals occur in a first interval of 0-100 hours, the instantaneous MTBX is equal to 25 hours (e.g., 100/4). However, if 2 removals occur in a second interval of 100-180 hours, then the instantaneous MTBX is equal to 40 hours (e.g., 80/2). It will additionally be appreciate that the instantaneous MTBX, at least in some embodiments, may be determined by calculating the reciprocal of the model intensity function (e.g., $1/\rho(t)$), as described above. The various filter options associated with the Instantaneous MTBX variant that the user selects to execute this algorithm variant will now be described. Before doing so, it is noted that for all of the variants of the MTBX Charts, the Context drop-down field 338 is always the same. This is because the context is the number of removals and shipments of the product associated with the selected part number(s) to a repair and overhaul facility. In the depicted embodiment, this context is referenced using the nomenclature "Shop Visits."

The Removal Type Filter drop-down field 1102 allows the user to select a specific removal type classification for which the algorithm variant will filter the product removal database 106. The removal type classifications that may be selected correspond to data entries made in the product removal database 106 by analysts/technicians at the repair and overhaul facility. It will be appreciated that these classifications may be varied and tailored to specific end-users of the system, but in the depicted embodiment the classifications include scheduled removals (Scheduled), unscheduled removals (Unscheduled), unscheduled removals with a significant fault found during testing (Unscheduled Significant), all unscheduled removals except for those in which no fault was found (Unscheduled All but NFF), and all removal types (All returns).

The Analysis Interval drop-down field 1104 allows a user to select a particular number of months over which a moving average may be calculated. Although the selectable number of months may vary, in the depicted embodiment the selectable number of months include 3, 4, 6, 9, and 12 months. The Criteria drop-down field 342 allows a user to select the general criteria (or criterion) on which the determination of whether to generate an alert is based. It will be appreciated that the selectable criteria and associated nomenclature correspond to data entries made in the product removal database 106 by analysts/technicians at the repair and overhaul facility. It will additionally be appreciated that the selectable criteria and associated nomenclature may be varied and tailored to specific end-users.

In the depicted embodiment, the selectable criteria nomenclature include "Below target value," "Outside SPC limits (Enter +/- sigma)," "drop for 3 consecutive months," and "drop year over year." If the "Below target value" criterion is selected, an alert will be triggered if the calculated MTBX value falls below the value entered into the Trigger field 1106 (described further below). If the "Outside SPC limits (Enter +/- sigma)" criterion is selected, an alert will be triggered if the calculated MTBX value for a month falls outside of a sigma limit that the user enters into the Trigger field 1106. If the "Drop for 3 consecutive months" criterion is selected, an alert will be triggered if the calculated MTBX value for the last 3 consecutive months is dropping by a percentage value that the user enters into the Trigger field 1106. If the "Drop year over year" criterion is selected, an alert will be triggered if the current calculated MTBX value has dropped a percentage value as compared to the calculated MTBX value for the same period in the previous year. As may be appreciated, the percentage value is entered into the Trigger field 1106 by a user.

The Trigger field 1106, as may be understood from the above description, allows a user to enter a specific alert trigger value based on the criteria (or criterion) selected in the Criteria drop-down field 342. It will be appreciated that the specific values that a user enters into the Trigger field 1106 will vary depending, for example, on the selected criteria, and the desired level at which the user wants to set the alert triggering threshold. Some non-limiting examples of values that may be entered for each selectable criteria are provided, for illustrative purposes only, in the table below.

| Criteria | Trigger |
| --- | --- |
| Below target value | 8000 |
| Outside SPC limits (Enter +/- sigma) | 2 or -2 |
| drop for 3 consecutive months | 5 |
| drop year over year | 35 |

The Months Moving Avg MTBX variant, when selected, calculates the MTBX over a specified number of months. For this variant, the MTBX is preferably calculated as the time-in-flight (e.g., flight-hours), which are accessed via the flight-hours database 106, divided by the number of removals, which are accessed via the product removal database 106. The Monthly Trend MTBX variant, when selected, calculates the MTBX for each month from a specified start date (e.g., the date set in the Start Date field 344). Here, the MTBX is preferably calculated as the time-in-flight (e.g., flight-hours) from the start date, which are accessed via the flight-hours database 108, divided by the number of removals since the start date, which are accessed via the product removal database 106. The Cumulative Trend MTBX variant, when selected, calculates the MTBX between two time intervals. Although this time interval may vary, in a particular preferred embodiment this time interval is from a specified start date (e.g., the date set in the Start Date field 344) through the present date (e.g., date on which the algorithm is currently being executed). Here again, the MTBX is preferably calculated as the cumulative time-in-flight (e.g., flight-hours) from the start date, which are accessed via the flight-hours database 108, divided by the cumulative number of removals since the start date, which are accessed via the product removal database 106.

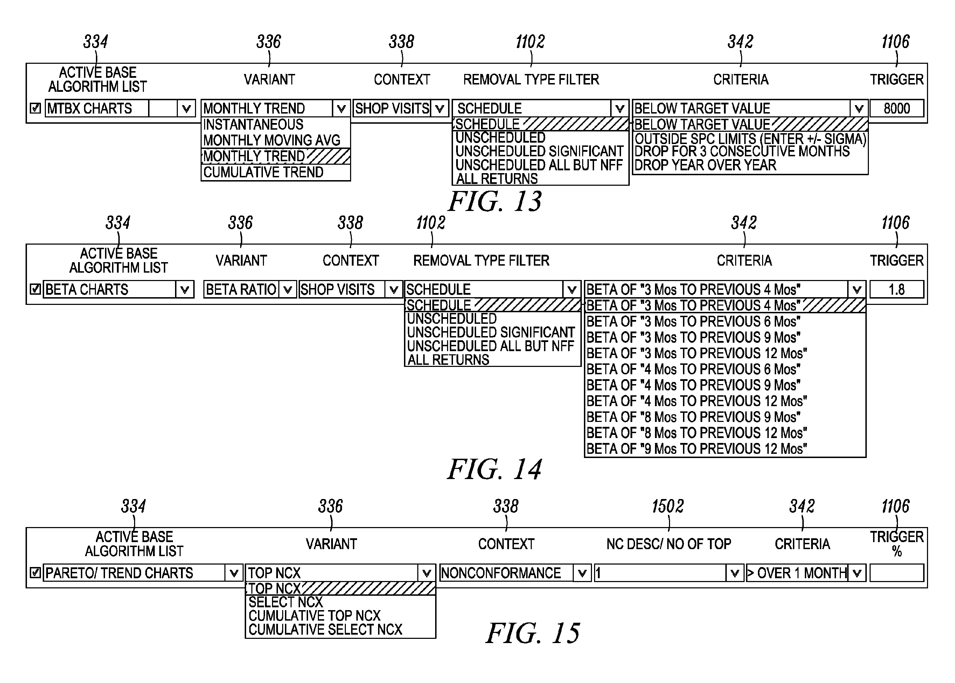

The various filter options that a user selects to execute the Months Moving Avg MTBX variant are identical to those associated with the Instantaneous MTBX variant. As such, a description of these options need not, and thus will not, be provided. Moreover, and as shown in FIG. 13, the various filter options available for a user to select to execute the Monthly Trend MTBX variant or the Cumulative Trend MTBX variant, are generally identical, except that when these MTBX variants are selected the Analysis Interval drop-down field 1104 is not displayed as a filter option. This, as may be readily appreciated, is because the analysis interval is predetermined for these particular variants.

Turning now to FIG. 14, the Beta Charts algorithm will be described. The Beta Charts algorithm is used to notify one or more users of the performance of the product associated with the selected product number(s). More specifically, and as was previously noted, the system 100 estimates the Crow-AMSAA statistical model $\beta$ value, in accordance with the above-described MLE method, using cumulative time-in-flight data (accessed via the flight-hours database 108) and cumulative removal data (accessed via the product removal database 106). It is noted that the system 100, unlike for the MTBX Charts algorithm, implements only a single Beta Charts algorithm, and not a plurality of Beta Charts algorithms. Thus, the Variants drop-down field 336 for the Beta Charts algorithm is always the same. In the depicted embodiment this is indicated using the nomenclature "Beta Ratio."

As with the MTBX Charts algorithm variants, the Context drop-down field 338 for the Beta Charts algorithm is always the same. Again, this is because the context is the number of removals and shipments of the product associated with the selected part number(s) to a repair and overhaul facility. This context, as previously indicated, is referenced in the depicted embodiment using the nomenclature "Shop Visits." The Removal Type Filter drop-down field 1102 provides the same options and functions as the MTBX Charts algorithm variants. Thus, this filter option will not be described again. Moreover, as with the Monthly Trend MTBX variant and the Cumulative Trend MTBX variant, when the Beta Charts algorithm is selected the Analysis Interval drop-down field 1104 is not displayed as a filter option. This is because the analysis interval, as will now be described, is set in using the Criteria drop-down field 342.

The Criteria drop-down field 342, as state before, allows a user to select the criterion on which the determination of whether to generate an alert is based. In the depicted embodiment, the selectable criteria are ratios of a $\beta$ estimate over a first time period to a $\beta$ estimate over a second time period. For example, if the selectable criterion "Beta of 3 Mos to Previous 6 Mos" is selected, the $\beta$ values for the previous 3 months and for the previous 6 months are each estimated. The ratio of the estimated $\beta$ value for the previous 3 months to the estimated $\beta$ value for the previous 6 months is then determined. In the depicted embodiment, the user interface screen 300 displays ten different criterion that may be selected. It will be appreciated, however, that this is merely exemplary, and that more or less than this number could be made available. Moreover, different time periods for estimating $\beta$ values could also be used. In any case, if the determined ratio is greater than the value entered in the Trigger field 1106, an alert is triggered.

The Trigger field 1106, as already mentioned, allows a user to enter a specific alert trigger value based on the criterion selected in the Criteria drop-down field 342. It will be appreciated that the specific values that a user enters into the Trigger field 1106 will vary depending, for example, on the selected criteria, and the desired level at which the user wants to set the alert triggering threshold. In the example depicted in FIG. 14, which is non-limiting and provided for illustrative purposes only, a value of 1.8 is entered in the Trigger field 1106 for the criterion of "Beta of 3 Mos to Previous 4 Mos."

Referring to FIG. 15, the Pareto/Trend Charts algorithm variants will now be described. Generally speaking, each Pareto/Charts algorithm variant provides detailed views of the specific nature of a nonconformance for the product associated with the selected part number(s). Before describing each of the Pareto/Trend Charts algorithm variants, it is noted that the depicted embodiment uses the symbol "NCx," where "x" stands for either Nonconformance or Nonconforming detail part, which correspond to user-fillable data fields in the product removal database 106. It is further noted that "Nonconformance," as used herein, refers to nonconformance at a part assembly level, whereas "Nonconforming Detail" refers to the detail part causing the nonconformance at the part assembly level.

As FIG. 15 depicts, there are four selectable variants of the Pareto/Trend Charts algorithm, which are automatically displayable in the Variant drop-down field 336 when the Pareto/Trend Charts algorithm is selected in the Active Base Algorithm List field 334. Each of these algorithm variants in turn have variants, based on selections made in the Context drop-down field 338, the NC Desc/No of Top drop-down field 1502, and the Criteria field 342. The Pareto/Trend Charts algorithm variants include a "Top NCx" variant, a "Select NCx" variant, a "Cumulative Top NCx" variant, and a "Cumulative Select NCx" variant. The Top NCx variant allows the top nonconformance(s) or nonconforming detail part (s) for the product associated with the selected part number(s) to be dynamically monitored. This allows a user to dynamically monitor return trends for NCx based on data in the product removal database 106, and using twelve month moving counts for comparison. The various filter options associated with the Top NCx Pareto/Trend Charts variant that the user selects to execute this algorithm variant will now be described.

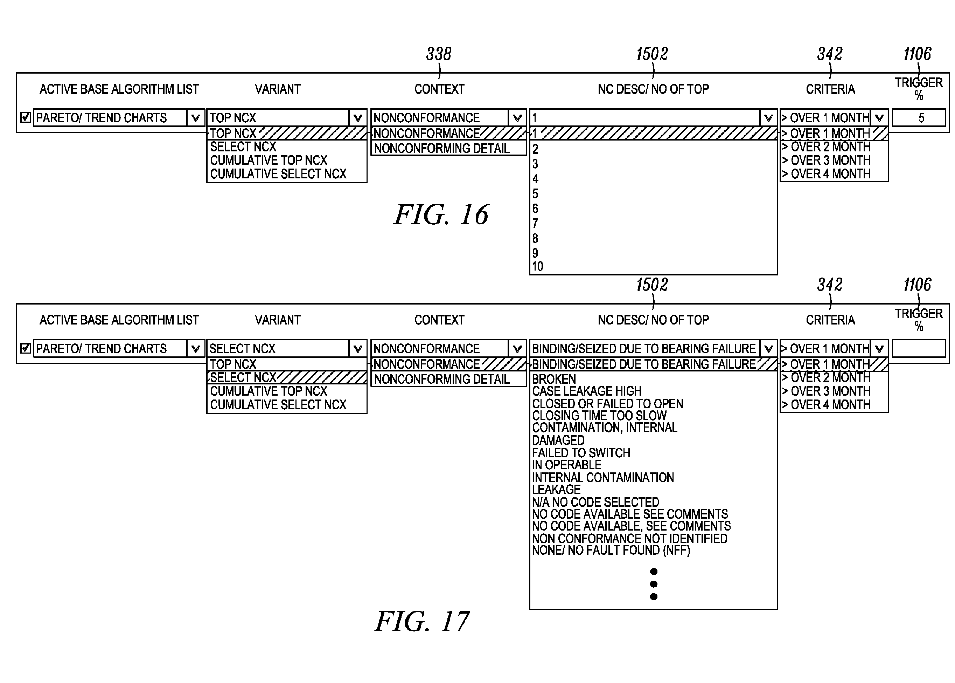

As depicted in FIG. 16, the Context drop-down field 338 allows a user to select either Nonconformance or Nonconforming Detail. If Nonconformance is selected, then the algorithm is based on nonconformance(s) for the product associated with the selected part number(s). If Nonconforming Detail is selected, then the algorithm is based on nonconforming detail part(s) for the product associated with the selected part number(s). The NC Desc/No of Top drop- down field 1502 allows a user to select a desired number of "Top NCx" of interest. In the embodiment depicted in FIG. 16, a user can select up to a maximum of 10 top NCx from the product removal database 106. It will be appreciated, however, that this number is merely exemplary, and that the system could be implemented to allow for the selection of more or less than this number.

The Criteria drop-down field 342 allows a user to select the number of months over which the selected number of Top NCx will be compared. In the depicted embodiment, the numbers of months that are selectable are 1, 2, 3, and 4 months. It will be appreciated, however, that this is merely exemplary and that more or less than these numbers of months could be used. As an example, if a user wants to check for a trigger in the month of February 2008, and "> Over 2 Month" is selected in the Criteria drop-down field 342, the 12 month moving count of Top NCx in February 2008 is compared to the 12 month moving count of Top NCx in December of 2007 (e.g., 2 months earlier). If this comparison exceeds the percentage value entered into the Trigger field 1106, then the system generates and transmits an alert.

With reference now to FIG. 17, the Select NCx Pareto/Trend Charts algorithm variant will be described. This Pareto/Trend Charts algorithm variant allows a user to dynamically monitor the trend of a selected NCx based on corresponding data in the product removal database 106. In other words, it allows a user to dynamically monitor the trend of specific nonformance(s) or nonconforming detail part(s) for the product associated with the selected part number (s). It may thus be appreciated that when this variant is selected, the Criteria drop-down field 342 allows a user to select either Nonconformance or Nonconforming Detail as the basis for the algorithm.

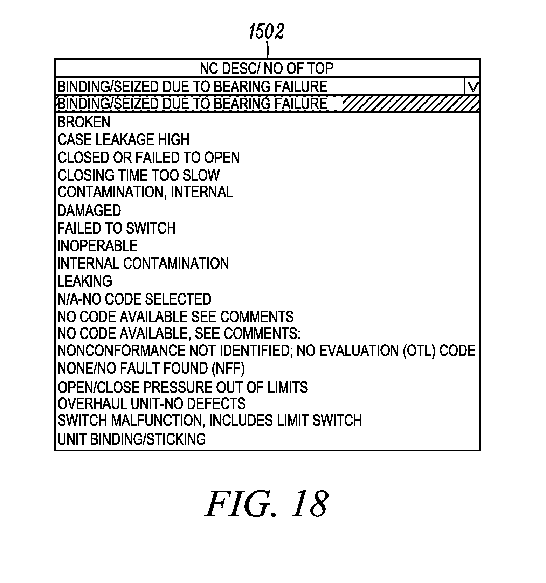

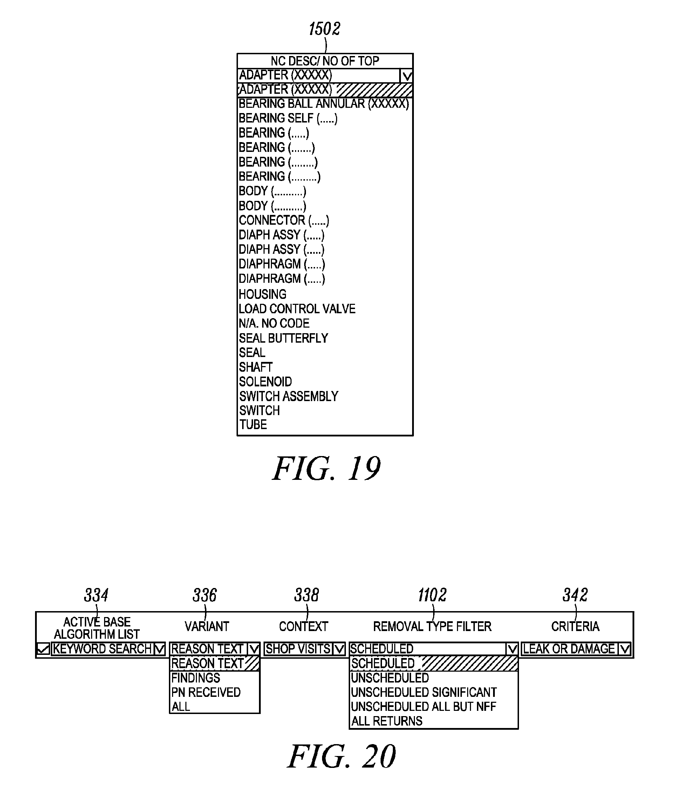

The NC Desc/No of Top drop-down field 1502 is automatically populated with nonconformance nomenclatures that correspond to nonconformance data entries in the product removal database 106. The specific nomenclatures will depend upon the filter selection made for the Context drop-down field 338. In particular, if Nonconformance is selected, then the NC Desc/No of Top drop-down field 1502 is auto-populated with nomenclatures representative of nonconformance at a part assembly level. Similarly, if Nonconforming Detail is selected, then the NC Desc/No of Top drop-down field 1502 is auto-populated with nomenclatures representative of nonconformance at the part subassembly level. In either case, the nomenclatures are, for convenience, preferably displayed alphabetically. Some examples of Nonconformance nomenclatures and Nonconforming Detail nomenclatures that may be displayed in the NC Desc/No of Top drop-down field 1502 are depicted in FIGS. 18 and 19, respectively. It will be appreciated that the depicted nomenclatures are non-inclusive, and are merely exemplary of suitable nomenclatures that may be used. The Criteria drop-down field 342 and the Trigger field 1106 for this Pareto/Trend Charts variant are identical in purpose and function to what was described above for the Top NCx variant. As such, descriptions of these fields will not be repeated.

The Cumulative Top NCx Pareto/Trend Charts variant is substantially identical to the Top NCx Pareto/Trend Charts variant, except that cumulative counts are compared for this option. Thus, the various filter options associated with the Cumulative Top NCx Pareto/Trend Charts variant that the user selects to execute this algorithm variant are identical to those associated with the Top NCx Pareto/Trend Charts variant. As such, the description of these filter options will not be repeated. Similarly, the Cumulative Select NCx Pareto/Trend Charts variant is substantially identical to the Select NCx Pareto/Trend Charts variant, except that cumulative counts are compared for this option. Thus, the various filter options associated with the Cumulative Select NCx Pareto/Trend Charts variant that the user selects to execute this algorithm variant are identical to those associated with the Select NCx Pareto/Trend Charts variant. As such, the description of these filter options also will not be repeated.

The remaining base algorithm variants to be described are the Keyword Search algorithm variants. The Keyword Search algorithm variants automatically search the product removal database 106 for one or more specified keywords and trigger an alert if the given keyword(s) is(are) found. In the depicted embodiment, the Keyword Search algorithm variants allow multiple keywords to be searched using OR-logic. Hence, if multiple keyword searching is desired, an "OR" should be placed between each keyword.

As FIG. 20 depicts, when the Keyword Search algorithm is selected in the Active Base Algorithm List drop-down field 334, the Assigning Algorithms section 306 of the user interface screen 300 displays only the Variant drop-down field 336, the Context drop-down field 338, the Removal Type Filter field 1102, and the Criteria field 342. As FIG. 20 further depicts, there are four selectable variants of the Keyword Search algorithm. Each of these algorithm variants in turn have variants, based on selections made in the Variant drop-down field 336, the Removal Type Filter field 1102, and the Criteria field 342. The Keyword Search algorithm variants include a "Reason Text" variant, a "Findings" variant, a "PN Received" variant, and an "All" variant.

For all of the Keyword Search algorithm variants, one or more data fields in the product removal database 106 are searched for one or more keywords that a user has entered into the Criteria field 342. The one or more data fields that are searched will vary with the selected Keyword Search algorithm variant. For example, if the Reason Text variant is selected, data fields in which analysts/technicians enter reasons for removing a product from its end-use system are searched. If the Findings variant is selected, data fields in which analysts/technicians enter comments relative to what was done to the product to restore serviceability are searched. If the PN Received variant is selected, data fields in which analysts/technicians enter manufacturer product (or part) numbers or nameplate data for the product are searched. For dynamic tracking of future part numbers, the Force Outline Addition option link 414 is used to add part numbers. If the All variant is selected, all of the data fields in the product removal database 106 are searched.

The Removal Type Filter drop-down field 1102, as described above in connection with the MTBX Charts algorithm variants, allows a user to select a specific removal type classification for which the Keyword Search algorithm variant will filter the product removal database 106. The removal type classifications are identical to those previously described, and the descriptions thereof will thus not be repeated.

As alluded to above, the Criteria field 342 allows a user to enter one or more keywords for which the product removal database 106 will be searched. A single keyword or multiple keywords may be entered into the Criteria field 342. If more than one keyword is entered, an "or" should be placed between each keyword.

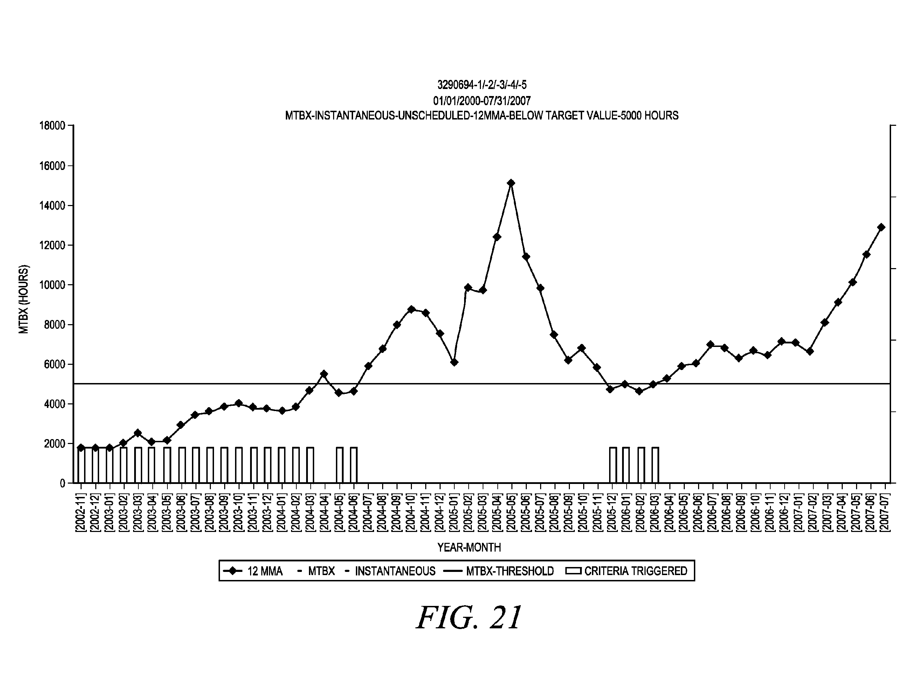

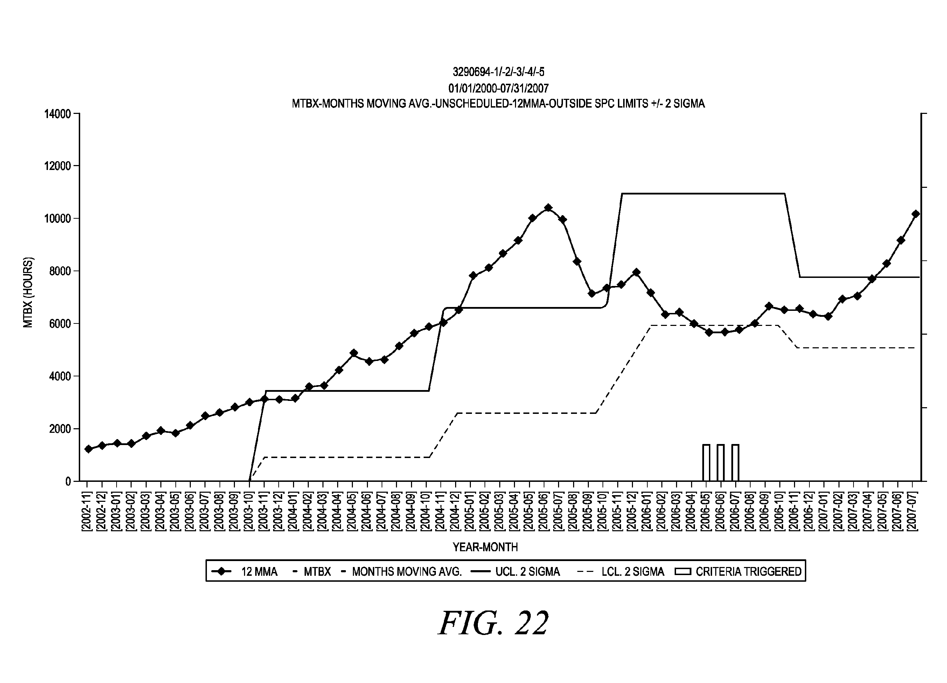

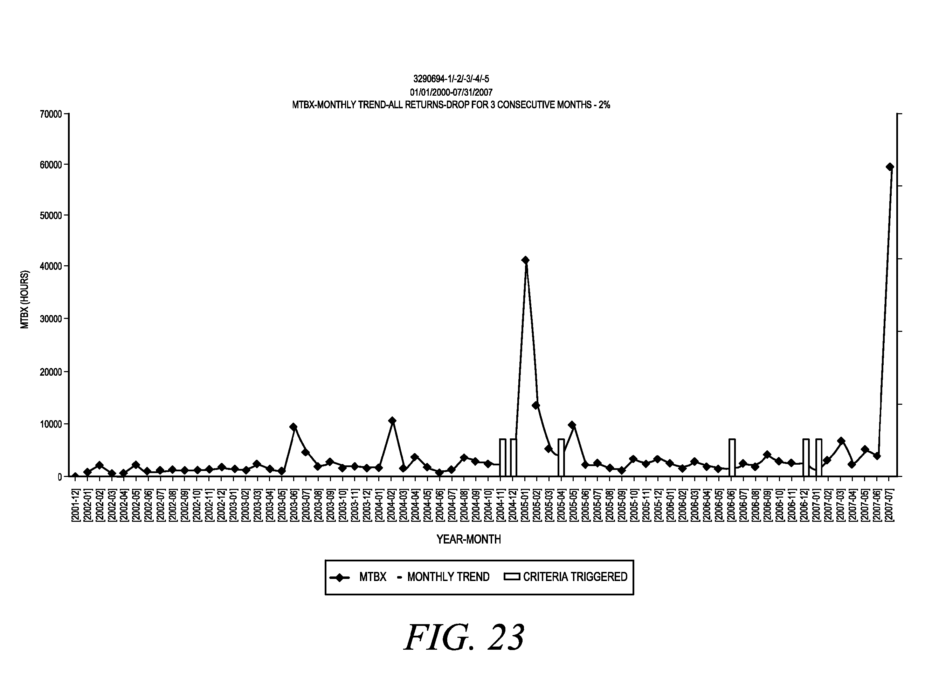

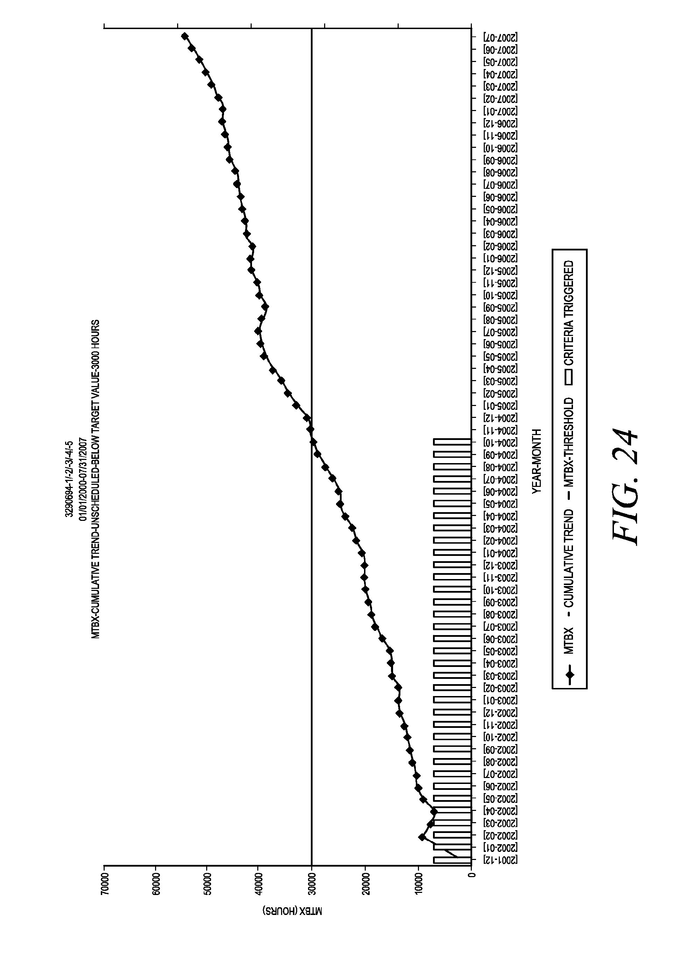

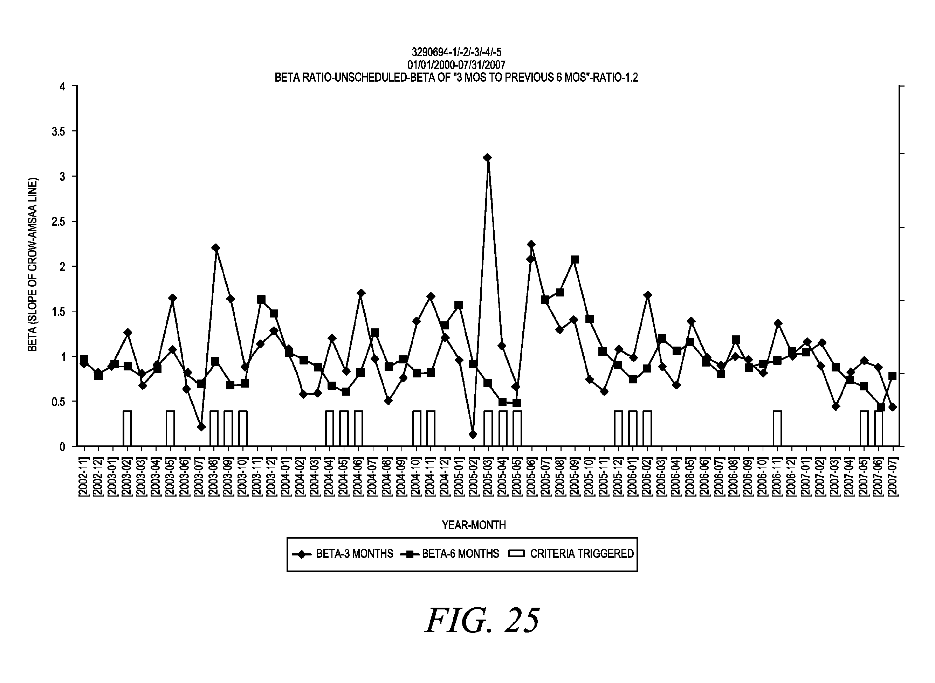

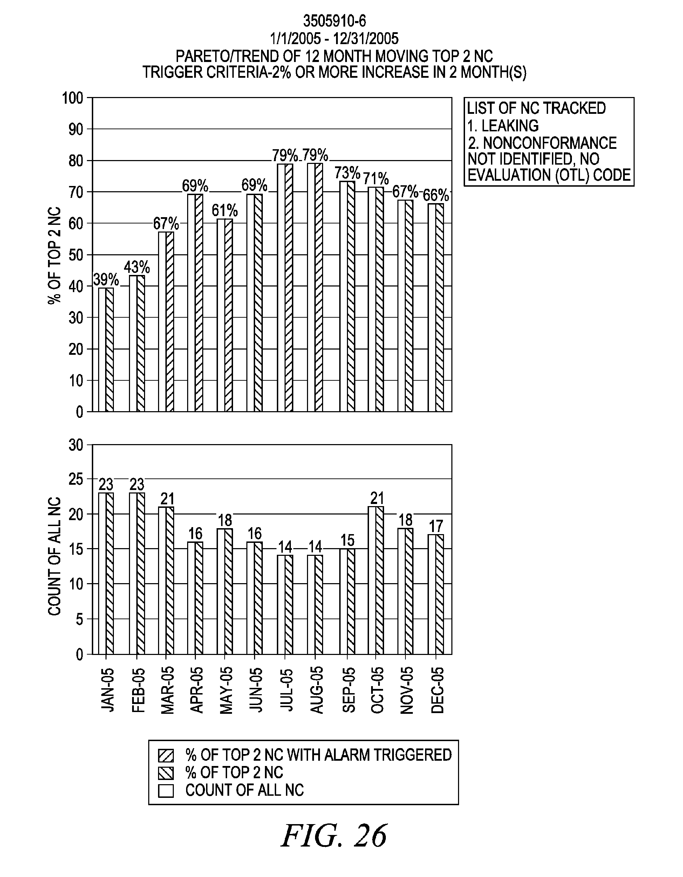

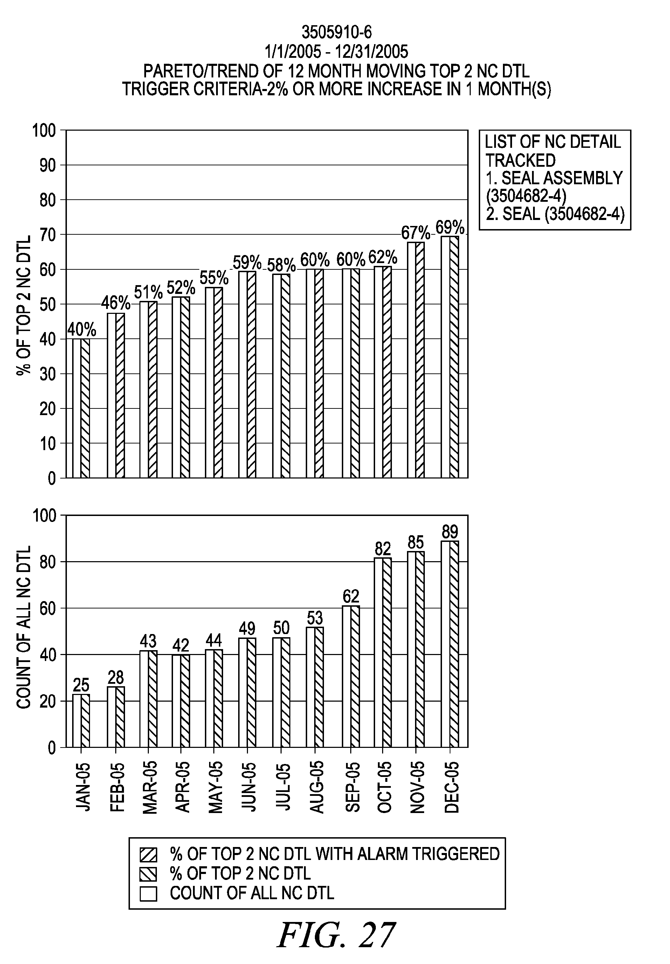

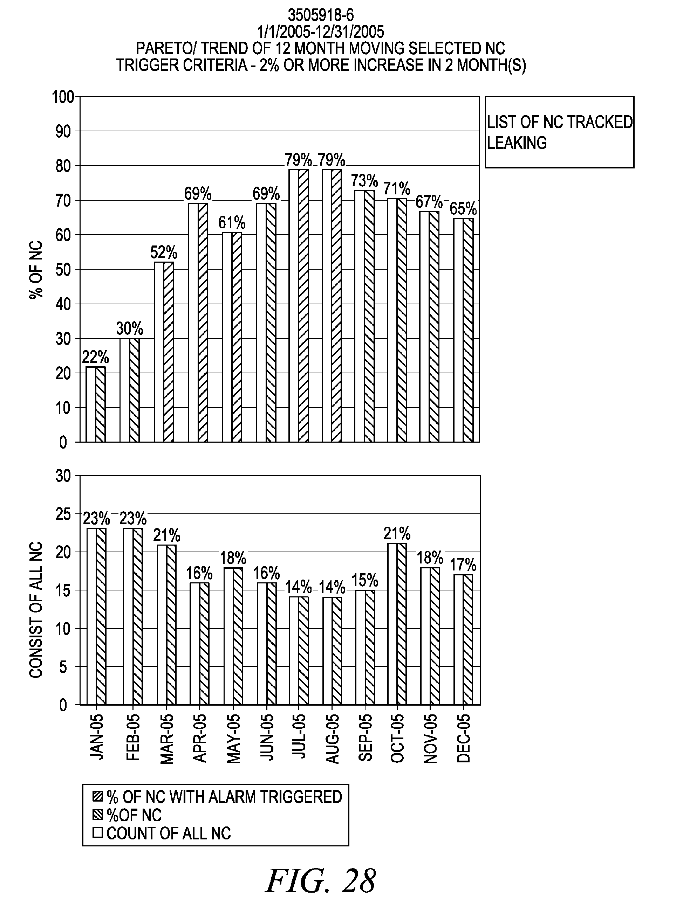

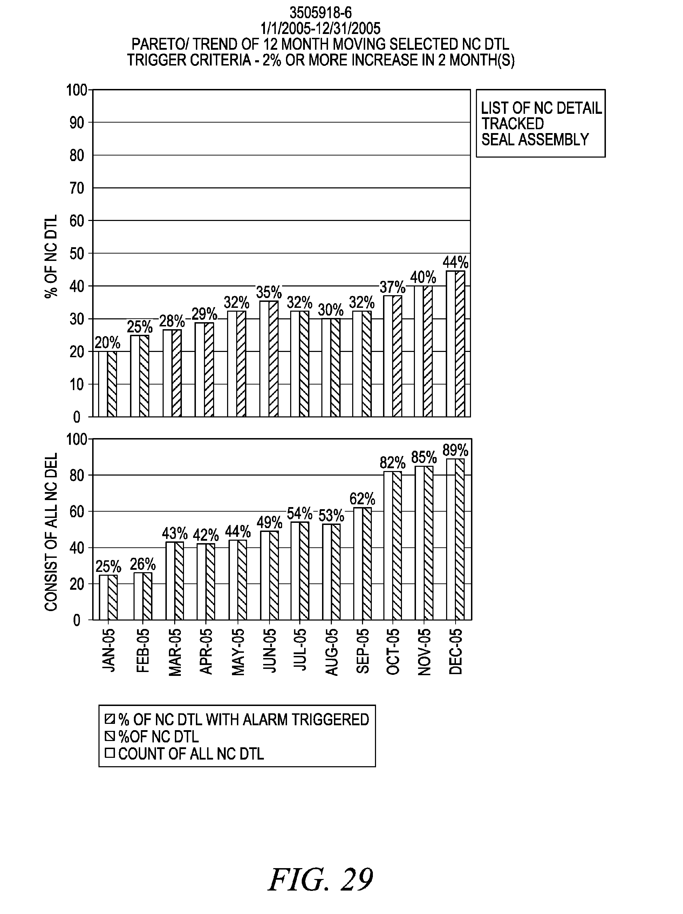

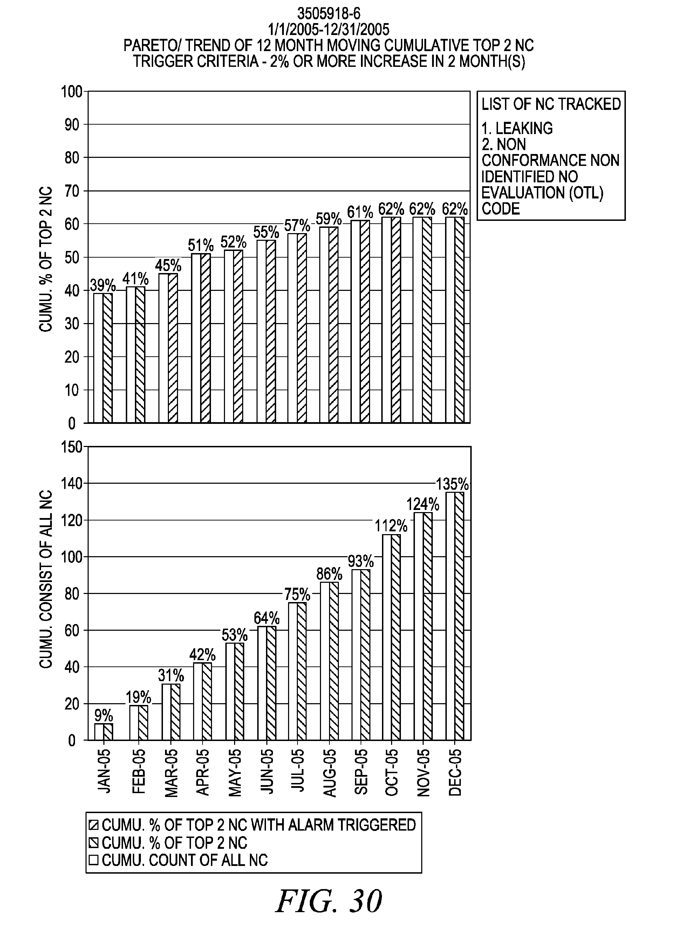

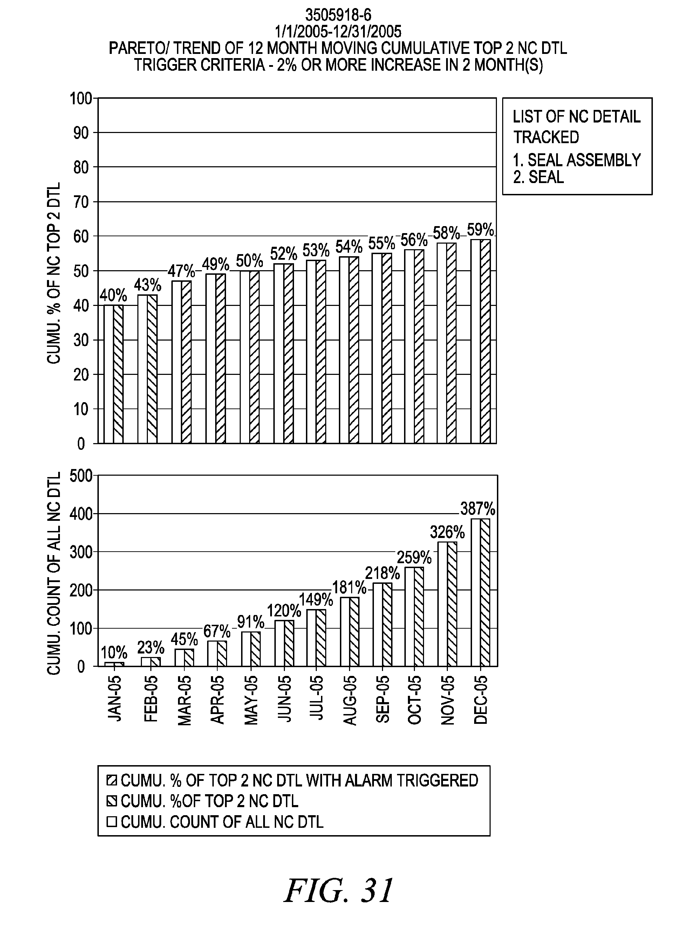

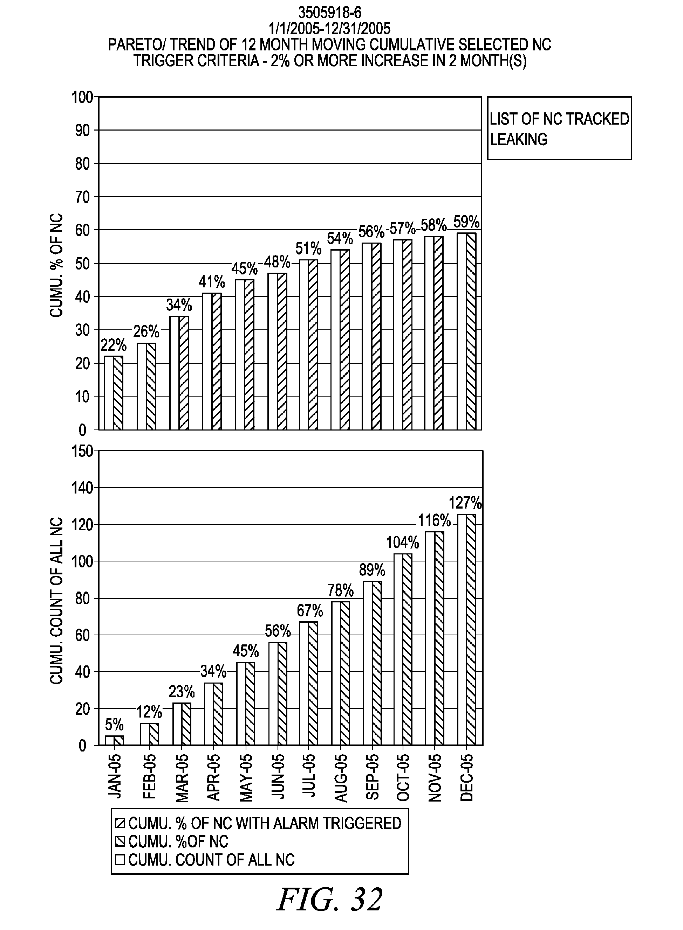

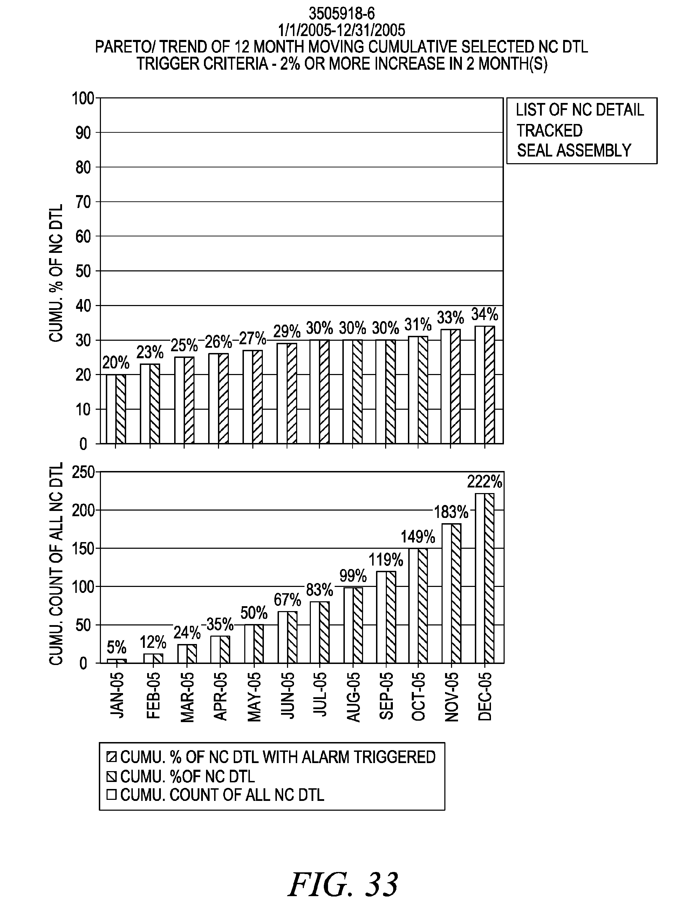

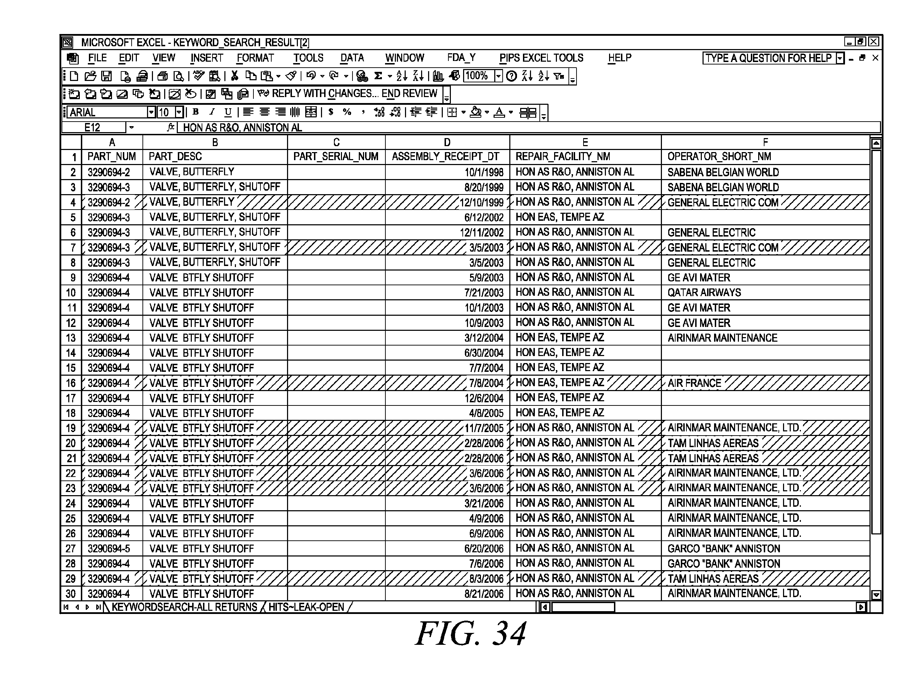

In addition to selectively generating and transmitting alerts to user-specified destinations/personnel, the system 100 may also selectively generate reports. It will be appreciated that the form and content of the reports that are generated may vary, and the form and content may depend, at least in part, on the selected base algorithm and algorithm variant. At least a portion of some exemplary reports that may be generated, which in the depicted embodiment are generated in output chart form, are depicted in FIGS. 21-34 and readily labeled to indicate the particular algorithm variant with which each is associated.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A method of tracking product reliability, comprising:

   periodically accessing, at a user-selected periodicity, removal data stored in a product removal database (106), the removal data associated with a product;
   periodically accessing, at the user-selected periodicity, product where-used data stored in a where-used database (107), the product where-used data associated with at least selected ones of the products for which removal data are stored in the product removal database (106) and representative of where the at least selected ones of the products are used;
   periodically accessing, at the user-selected periodicity, time-in-service data stored in an aircraft flight-hours database (108), the time-in-service data associated with each product for which where-used data are stored in the product where-used database (107);
   executing one or more user-selected algorithms, using at least a portion of the periodically accessed removal data, to determine if a criterion for a user-specified reliability parameter is not met; and
   transmitting an alert to a preset destination if it is determined that the criterion for the user-selected reliability parameter is not met.

2. The method of Claim 1, further comprising:

   automatically generating one or more reliability-related reports for the product line if the criterion for the user-specified reliability parameter is not met.

3. The method of Claim 7, further comprising:

   rendering images representative of at least portions of the one or more reliability-related reports.

4. The method of Claim 1, wherein:

   the step of transmitting an alert comprises generating and transmitting an electronic mail (e-mail) message to the preset destination; and
   the preset destination comprises a preset e-mail address.

5. The method of Claim 4, further comprising:

   generating and transmitting the e-mail message to a plurality of preset e-mail addresses.

6. A system for tracking product reliability, comprising:

   a product removal database (106) having removal data stored therein, the removal data associated with a product;
   a product where-used data database (107) having product where-used data stored therein, the product where-used data associated with at least selected ones of the products for which removal data are stored in the product removal database (106) and representative of where the at least selected ones of the products are used;
   an aircraft flight-hours database (108) having time-in-service data stored therein, the time-in-service data associated with each product for which where-used data are stored in the product where-used database (107); and a processor (122) in operable communication with the product removal database (106), the where-used database (107), and the aircraft flight-hours database (108), the processor (122) configured to:

periodically access, at a user-selected periodicity, removal data stored in the product removal database (106),

periodically access, at the user-selected periodicity, product where-used data stored in the where-used database (107),

periodically access, at the user-selected periodicity, time-in-service data stored in the aircraft flight-hours database (108),

execute one or more user-selected algorithms, using at least a portion of the periodically accessed removal data and the periodically accessed time-in-flight data, to determine a reliability-related criterion for the product line,

compare the determined reliability-related parameter to a user-selected criterion, and

transmit an alert to a preset destination if the determined reliability-related criterion does not meet the user-selected criterion.

7. The system of Claim 6, wherein the processor (122) is further configured to automatically generate one or more reliability-related reports for the product line if the criterion for the user-specified reliability parameter is not met.

8. The system of Claim 7, further comprising:

a display device (116) in operable communication with the processor (122) and responsive to image rendering display commands to render one or more images;

wherein the processor (122) is further configured to supply image rendering display commands to the display device (116) that cause the display device (116) to render images representative of at least portions of the one or more reliability-related reports.

9. The system of Claim 6, wherein:

The preset destination is a preset electronic mail (e-mail) address; and
the processor (122) is further configured to generate and transmit an e-mail message to the preset e-mail address.

*FIG. 1*

EP 2 178 037 A1

*200*

START

*202*

ACCESS REMOVAL DATA
ASSOCIATED WITH PRODUCT

*204*

TIME-IN-
FLIGHT
DATA NEEDED
?

NO

YES

*206*

ACCESS TIME-IN-FLIGHT
DATA FOR PRODUCT

*208*

EXECUTE USER-SELECTED
ALGORITHMS

*212*

ONE OR MORE
CRITERIA FOR
DETERMINED
RELIABILITY-RELATED
PARAMETER MET
?

YES

NO

*214*

GENERATE AND TRANSMIT
NOTIFICATION TO USER COMPUTERS

*FIG. 2*

ADMIN I ALERT RULE
ALERT RULE     ⌐*332*              ALL FIELDS MARKED WITH * ARE MANDATORY
SELECT OUTLINE NUMBER*  ADD OUTLINE NUMBER

⌐*316*

REMOVE

| REPAIR FACILITY ⌐*319* | FINDINGS OPERATORS ⌐*323* |
|---|---|
| | REFRESH OPERATORS |

⟩ *302*

*318*  *324*  *322*

REMOVAL TYPES                    EVALUATION TYPE          ⌐*327*

| ADMINISTRATION | MINOR FAULT |
| CONVENIENCE | NO FAULT |
| CORE RETURN | NOT CLASSIFIED |
| DAMAGE | NOT EVALUATED DUE TO C |
| DOCUMENTATION | NOT EVALUATED DUE TO P |
| DOES NOT APPLY | SIGNIFICANT FAULT |

*325*    *326*

FOR REPORTS REQUIRING HOURS
AIRCRAFT MODEL:  ENGINE:        QPA:    APU:

| XXXXX ▽ | ▽ | 1 ▽ | | ADD | REMOVE |

⟩ *304*

MODEL AND TYPE              OPERATORS    SELECTED OPERATORS

CREATE ALERT ALGORITHM

ASSIGNING ALGORITHMS
    *334*      *336*        *338*                            *342*

| ACTIVE BASE ALGORITHM LIST | VARIANT | CONTEXT | REMOVAL TYPE FILTER | ANALYSIS INTERVAL | CRITERIA | TRIGGER |
|---|---|---|---|---|---|---|
| ☑ MTBX CHARTS ▽ | INSTANTANEOUS ▽ | SHOP VISITS ▽ | SCHEDULED ▽ | 3 MMA ▽ | BELOW TARGET VALUE ▽ | |

⟩ *306*

ALERT SELECTION
START DATE  ⌐*344*              REPORTING DAY OF WEEK
                               1) SUNDAY          ▽
☑ ALERT RUNNING                               *346*  *348*

PERIODICITY
○ DAILY      ○ WEEKLY    ◉ MONTHLY    ○ QUARTERLY  ○ ANNUALLY

⟩ *308*

NOTIFICATION GROUPS  USER GROUP LIST

| AIRBUS-VALVES |
| BOEING-VALVES |
| EMBRAER-VALVES |
| GE-HMUS |
| GE-STARTERS |
| GE-VALVES |

*352*        *354*

*FIG. 3*

ADD OUTLINE NUMBERS

OUTLINE NUMBERS

404 ⌐

XXXXXX *FIND AVAILABLE PRODUCTS ⌐412

SHOW: FORCE OUTLINE ADDITION OPTION

└414

XXXXXX-XX
XXXXXX-YY

406

ADD    CLOSE

408

**FIG. 4**

508 ⌐

HIDE FORCE OUTLINE ADDITION
OPTION

502

ENTER PRODUCT TO BE ADDED
FORCEFULLY

XXXXX   FORCE PRODUCT

504                          506

**FIG. 5**

_318_

REPAIR FACILITY

| HON AS R&O, ANNISTON AL<br>HON AS R&O, PHOENIX AZ<br>HON EAS, TEMPE AZ | ≫<br>≪ | |

## FIG. 6

FINDINGS OPERATORS

| REFRESH OPERATORS |—_702_

_322_

| *ALITALIA<br>AIR CANADA<br>AIR FRANCE<br>ALITALIA<br>ALLIEDSIGNAL SINGAPO<br>ASA GMBH | ≫<br>≪ | |

## FIG. 7

_324_

REMOVAL TYPES

| ADMINISTRATION<br>CONVENIENCE<br>CORE RETURN<br>DAMAGE<br>DOCUMENTATION<br>DOES NOT APPLY | ≫<br>≪ | |

## FIG. 8

_326_

EVALUATION TYPE

| MINOR FAULT<br>NO FAULT<br>NOT CLASSIFIED<br>NOT EVALUATED DUE TO C<br>NOT EVALUATED DUE TO P<br>SIGNIFICANT FAULT | ≫<br>≪ | |

## FIG. 9

FOR REPORTS REQUIRING HOURS

AIRCRAFT MODEL : _____ [v]    ENGINE : *1004* _____ [v]    QPA : *1006* [1] [v]    APU : *1008* _____ [v]    *1018* [ADD]    [REMOVE]

*1002*

| MODEL AND TYPE | OPERATORS | | SELECTED OPERATORS |
|---|---|---|---|
| | | [»] [«] | |

*1012*    *1014*    *1016*

*FIG. 10*

| 334 ACTIVE BASE ALGORITHM LIST | 336 VARIANT | 338 CONTEXT | 1102 REMOVAL TYPE FILTER | 1104 ANALYSIS INTERVAL | 342 CRITERIA | 1106 TRIGGER |
|---|---|---|---|---|---|---|
| ☑ MTBX CHARTS [v] | INSTANTANEOUS [v] | SHOP VISITS [v] | SCHEDULED [v] | 3 MMA [v] | BELOW TARGET VALUE [v] | |

MTBX CHARTS
BETA CHARTS
PARETO/ TREND CHARTS
KEYWORD SEARCH

*FIG. 11*

| 334 ACTIVE BASE ALGORITHM LIST | 336 VARIANT | 338 CONTEXT | 1102 REMOVAL TYPE FILTER | 1104 ANALYSIS INTERVAL | 342 CRITERIA | 1106 TRIGGER |
|---|---|---|---|---|---|---|
| ☑ MTBX CHARTS [v] | INSTANTANEOUS [v] | SHOP VISIT [v] | SCHEDULED [v] | 3 MMA [v] | BELOW TARGET VALUE [v] | |

INSTANTANEOUS
MONTHS MOVING AVG.
MONTHLY TREND
CUMULATIVE TREND

SCHEDULED
UNSCHEDULED
UNSCHEDULED SIGNIFICANT
UNSCHEDULED ALL BUT NFF
ALL RETURNS

3 MMA
4 MMA
6 MMA
9 MMA
12 MMA

BELOW TARGET VALUE
OUTSIDE SPC LIMITS(ENTER +/- SIGMA)
DROP FOR 3 CONSECUTIVE MONTHS
DROP YEAR OVER YEAR

*FIG. 12*

EP 2 178 037 A1

EP 2 178 037 A1

| 334 | 336 | 338 | 1102 | 342 | 1106 |
|---|---|---|---|---|---|
| ACTIVE BASE ALGORITHM LIST | VARIANT | CONTEXT | REMOVAL TYPE FILTER | CRITERIA | TRIGGER |
| ☑ MTBX CHARTS ▾ | MONTHLY TREND ▾ | SHOP VISITS ▾ | SCHEDULE ▾ | BELOW TARGET VALUE ▾ | 8000 |
| | INSTANTANEOUS / MONTHLY MOVING AVG / MONTHLY TREND / CUMULATIVE TREND | | SCHEDULE / UNSCHEDULED / UNSCHEDULED SIGNIFICANT / UNSCHEDULED ALL BUT NFF / ALL RETURNS | BELOW TARGET VALUE / OUTSIDE SPC LIMITS (ENTER +/- SIGMA) / DROP FOR 3 CONSECUTIVE MONTHS / DROP YEAR OVER YEAR | |

*FIG. 13*

| 334 | 336 | 338 | 1102 | 342 | 1106 |
|---|---|---|---|---|---|
| ACTIVE BASE ALGORITHM LIST | VARIANT | CONTEXT | REMOVAL TYPE FILTER | CRITERIA | TRIGGER |
| ☑ BETA CHARTS ▾ | BETA RATIO ▾ | SHOP VISITS ▾ | SCHEDULE ▾ | BETA OF "3 Mos TO PREVIOUS 4 Mos" ▾ | 1.8 |
| | | | SCHEDULE / UNSCHEDULED / UNSCHEDULED SIGNIFICANT / UNSCHEDULED ALL BUT NFF / ALL RETURNS | BETA OF "3 Mos TO PREVIOUS 4 Mos" / BETA OF "3 Mos TO PREVIOUS 6 Mos" / BETA OF "3 Mos TO PREVIOUS 9 Mos" / BETA OF "3 Mos TO PREVIOUS 12 Mos" / BETA OF "4 Mos TO PREVIOUS 6 Mos" / BETA OF "4 Mos TO PREVIOUS 9 Mos" / BETA OF "4 Mos TO PREVIOUS 12 Mos" / BETA OF "8 Mos TO PREVIOUS 9 Mos" / BETA OF "8 Mos TO PREVIOUS 12 Mos" / BETA OF "9 Mos TO PREVIOUS 12 Mos" | |

*FIG. 14*

| 334 | 336 | 338 | 1502 | 342 | 1106 |
|---|---|---|---|---|---|
| ACTIVE BASE ALGORITHM LIST | VARIANT | CONTEXT | NC DESC/ NO OF TOP | CRITERIA | TRIGGER % |
| ☑ PARETO/ TREND CHARTS ▾ | TOP NCX ▾ | NONCONFORMANCE ▾ | 1 ▾ | > OVER 1 MONTH ▾ | |
| | TOP NCX / SELECT NCX / CUMULATIVE TOP NCX / CUMULATIVE SELECT NCX | | | | |

*FIG. 15*

| | | | 338 | | 1502 | | 342 | 1106 |
|---|---|---|---|---|---|---|---|---|

| ACTIVE BASE ALGORITHM LIST | VARIANT | CONTEXT | NC DESC/ NO OF TOP | CRITERIA | TRIGGER % |
|---|---|---|---|---|---|
| ☑ PARETO/ TREND CHARTS ▼ | TOP NCX ▼ | NONCONFORMANCE ▼ | 1 ▼ | > OVER 1 MONTH ▼ | 5 |

Dropdowns:

VARIANT:
- TOP NCX
- SELECT NCX
- CUMULATIVE TOP NCX
- CUMULATIVE SELECT NCX

CONTEXT:
- NONCONFORMANCE
- NONCONFORMING DETAIL

NC DESC/ NO OF TOP:
1
2
3
4
5
6
7
8
9
10

CRITERIA:
- > OVER 1 MONTH
- > OVER 2 MONTH
- > OVER 3 MONTH
- > OVER 4 MONTH

*FIG. 16*

| | | | | 1502 | 342 | 1106 |
|---|---|---|---|---|---|---|

| ACTIVE BASE ALGORITHM LIST | VARIANT | CONTEXT | NC DESC/ NO OF TOP | CRITERIA | TRIGGER % |
|---|---|---|---|---|---|
| ☑ PARETO/ TREND CHARTS ▼ | SELECT NCX ▼ | NONCONFORMANCE ▼ | BINDING/SEIZED DUE TO BEARING FAILURE ▼ | > OVER 1 MONTH ▼ | |

Dropdowns:

VARIANT:
- TOP NCX
- SELECT NCX
- CUMULATIVE TOP NCX
- CUMULATIVE SELECT NCX

CONTEXT:
- NONCONFORMANCE
- NONCONFORMING DETAIL

NC DESC/ NO OF TOP:
- BINDING/SEIZED DUE TO BEARING FAILURE
- BROKEN
- CASE LEAKAGE HIGH
- CLOSED OR FAILED TO OPEN
- CLOSING TIME TOO SLOW
- CONTAMINATION, INTERNAL
- DAMAGED
- FAILED TO SWITCH
- IN OPERABLE
- INTERNAL CONTAMINATION
- LEAKAGE
- N/A NO CODE SELECTED
- NO CODE AVAILABLE SEE COMMENTS
- NO CODE AVAILABLE, SEE COMMENTS
- NON CONFORMANCE NOT IDENTIFIED
- NONE/ NO FAULT FOUND (NFF)
  •
  •
  •

CRITERIA:
- > OVER 1 MONTH
- > OVER 2 MONTH
- > OVER 3 MONTH
- > OVER 4 MONTH

*FIG. 17*

EP 2 178 037 A1

1502

| NC DESC/ NO OF TOP |
|---|
| BINDING/SEIZED DUE TO BEARING FAILURE ⌄ |
| BINDING/SEIZED DUE TO BEARING FAILURE |
| BROKEN |
| CASE LEAKAGE HIGH |
| CLOSED OR FAILED TO OPEN |
| CLOSING TIME TOO SLOW |
| CONTAMINATION, INTERNAL |
| DAMAGED |
| FAILED TO SWITCH |
| INOPERABLE |
| INTERNAL CONTAMINATION |
| LEAKING |
| N/A-NO CODE SELECTED |
| NO CODE AVAILABLE SEE COMMENTS |
| NO CODE AVAILABLE, SEE COMMENTS: |
| NONCONFORMANCE NOT IDENTIFIED; NO EVALUATION (OTL) CODE |
| NONE/NO FAULT FOUND (NFF) |
| OPEN/CLOSE PRESSURE OUT OF LIMITS |
| OVERHAUL UNIT-NO DEFECTS |
| SWITCH MALFUNCTION, INCLUDES LIMIT SWITCH |
| UNIT BINDING/STICKING |

## FIG. 18

*1502*

| NC DESC/ NO OF TOP |
|---|
| ADAPTER (XXXXX) ⌄ |
| ADAPTER (XXXXX) /////// |
| BEARING BALL ANNULAR (XXXXX) |
| BEARING SELF (.....) |
| BEARING (.....) |
| BEARING (.......) |
| BEARING (........) |
| BEARING (.........) |
| BODY (..........) |
| BODY (..........) |
| CONNECTOR (.....) |
| DIAPH ASSY (.....) |
| DIAPH ASSY (.....) |
| DIAPHRAGM (.....) |
| DIAPHRAGM (.....) |
| HOUSING |
| LOAD CONTROL VALVE |
| N/A. NO CODE |
| SEAL BUTTERFLY |
| SEAL |
| SHAFT |
| SOLENOID |
| SWITCH ASSEMBLY |
| SWITCH |
| TUBE |

## FIG. 19

*334* *336* *338* *1102* *342*

| ACTIVE BASE ALGORITHM LIST | VARIANT | CONTEXT | REMOVAL TYPE FILTER | CRITERIA |
|---|---|---|---|---|
| ☑ KEYWORD SEARCH ⌄ | REASON TEXT ⌄ | SHOP VISITS ⌄ | SCHEDULED ⌄ | LEAK OR DAMAGE ⌄ |
| | REASON TEXT /// | | SCHEDULED //////////// | |
| | FINDINGS | | UNSCHEDULED | |
| | PN RECEIVED | | UNSCHEDULED SIGNIFICANT | |
| | ALL | | UNSCHEDULED ALL BUT NFF | |
| | | | ALL RETURNS | |

## FIG. 20

3290694-1/-2/-3/-4/-5
01/01/2000-07/31/2007
MTBX-INSTANTANEOUS-UNSCHEDULED-12MMA-BELOW TARGET VALUE-5000 HOURS

*FIG. 21*

FIG. 22

3290694-1/-2/-3/-4/-5
01/01/2000-07/31/2007
MTBX-MONTHLY TREND-ALL RETURNS-DROP FOR 3 CONSECUTIVE MONTHS - 2%

*FIG. 23*

3290694-1/-2/-3/-4/-5
01/01/2000-07/31/2007
MTBX-CUMULATIVE TREND-UNSCHEDULED-BELOW TARGET VALUE-3000 HOURS

YEAR-MONTH

MTBX   - CUMULATIVE TREND   — MTBX-THRESHOLD   ☐ CRITERIA TRIGGERED

*FIG. 24*

3290694-1/-2/-3/-4/-5
01/01/2000-07/31/2007
BETA RATIO-UNSCHEDULED-BETA OF "3 MOS TO PREVIOUS 6 MOS"-RATIO-1.2

*FIG. 25*

3505910-6
1/1/2005 - 12/31/2005
PARETO/TREND OF 12 MONTH MOVING TOP 2 NC
TRIGGER CRITERIA-2% OR MORE INCREASE IN 2 MONTH(S)

LIST OF NC TRACKED
1. LEAKING
2. NONCONFORMANCE
NOT IDENTIFIED, NO
EVALUATION (OTL) CODE

% OF TOP 2 NC

39% 43% 67% 69% 61% 69% 79% 79% 73% 71% 67% 66%

COUNT OF ALL NC

23 23 21 16 18 16 14 14 15 21 18 17

JAN-05 FEB-05 MAR-05 APR-05 MAY-05 JUN-05 JUL-05 AUG-05 SEP-05 OCT-05 NOV-05 DEC-05

▨ % OF TOP 2 NC WITH ALARM TRIGGERED
▧ % OF TOP 2 NC
☐ COUNT OF ALL NC

*FIG. 26*

3505910-6
1/1/2005 - 12/31/2005
PARETO/TREND OF 12 MONTH MOVING TOP 2 NC DTL
TRIGGER CRITERIA-2% OR MORE INCREASE IN 1 MONTH(S)

LIST OF NC DETAIL
TRACKED
1. SEAL ASSEMBLY
(3504682-4)
2. SEAL (3504682-4)

**FIG. 27**

31

3505918-6
1/1/2005-12/31/2005
PARETO/ TREND OF 12 MONTH MOVING SELECTED NC
TRIGGER CRITERIA - 2% OR MORE INCREASE IN 2 MONTH(S)

LIST OF NC TRACKED
LEAKING

☑ % OF NC WITH ALARM TRIGGERED
◪ %OF NC
☐ COUNT OF ALL NC

*FIG. 28*

**3505918-6**
**1/1/2005-12/31/2005**
**PARETO/ TREND OF 12 MONTH MOVING SELECTED NC DTL**
**TRIGGER CRITERIA - 2% OR MORE INCREASE IN 2 MONTH(S)**

LIST OF NC DETAIL
TRACKED
SEAL ASSEMBLY

% OF NC DTL: 20%, 25%, 28%, 29%, 32%, 35%, 32%, 30%, 32%, 37%, 40%, 44%

CONSIST OF ALL NC DEL: 25%, 26%, 43%, 42%, 44%, 49%, 54%, 53%, 62%, 82%, 85%, 89%

JAN-05, FEB-05, MAR-05, APR-05, MAY-05, JUN-05, JUL-05, AUG-05, SEP-05, OCT-05, NOV-05, DEC-05

☑ % OF NC DTL WITH ALARM TRIGGERED
◹ %OF NC DTL
☐ COUNT OF ALL NC DTL

*FIG. 29*

3505918-6
1/1/2005-12/31/2005
PARETO/ TREND OF 12 MONTH MOVING CUMULATIVE TOP 2 NC
TRIGGER CRITERIA - 2% OR MORE INCREASE IN 2 MONTH(S)

FIG. 30

3505918-6
1/1/2005-12/31/2005
PARETO/ TREND OF 12 MONTH MOVING CUMULATIVE TOP 2 NC DTL
TRIGGER CRITERIA - 2% OR MORE INCREASE IN 2 MONTH(S)

LIST OF NC DETAIL TRACKED
1. SEAL ASSEMBLY
2. SEAL

☒ CUMU. % OF TOP 2 NC DTL WITH ALARM TRIGGERED
☒ CUMU. %OF TOP 2 NC DTL
☐ CUMU. COUNT OF ALL NC DTL

*FIG. 31*

3505918-6
1/1/2005-12/31/2005
PARETO/ TREND OF 12 MONTH MOVING CUMULATIVE SELECTED NC
TRIGGER CRITERIA - 2% OR MORE INCREASE IN 2 MONTH(S)

FIG. 32

3505918-6
1/1/2005-12/31/2005
PARETO/ TREND OF 12 MONTH MOVING CUMULATIVE SELECTED NC DTL
TRIGGER CRITERIA - 2% OR MORE INCREASE IN 2 MONTH(S)

FIG. 33

MICROSOFT EXCEL - KEYWORD_SEARCH_RESULT[2]

FILE   EDIT   VIEW   INSERT   FORMAT   TOOLS   DATA   WINDOW   FDA_Y   PIPS EXCEL TOOLS   HELP   TYPE A QUESTION FOR HELP

ARIAL   10   B   I   U

E12   fx   HON AS R&O, ANNISTON AL

|   | A | B | C | D | E | F |
|---|---|---|---|---|---|---|
| 1 | PART_NUM | PART_DESC | PART_SERIAL_NUM | ASSEMBLY_RECEIPT_DT | REPAIR_FACILITY_NM | OPERATOR_SHORT_NM |
| 2 | 3290694-2 | VALVE, BUTTERFLY | | 10/1/1998 | HON AS R&O, ANNISTON AL | SABENA BELGIAN WORLD |
| 3 | 3290694-3 | VALVE, BUTTERFLY, SHUTOFF | | 8/20/1999 | HON AS R&O, ANNISTON AL | SABENA BELGIAN WORLD |
| 4 | 3290694-2 | VALVE, BUTTERFLY | | 12/10/1999 | HON AS R&O, ANNISTON AL | GENERAL ELECTRIC COM |
| 5 | 3290694-3 | VALVE, BUTTERFLY, SHUTOFF | | 6/12/2002 | HON EAS, TEMPE AZ | |
| 6 | 3290694-3 | VALVE, BUTTERFLY, SHUTOFF | | 12/11/2002 | HON AS R&O, ANNISTON AL | GENERAL ELECTRIC |
| 7 | 3290694-3 | VALVE, BUTTERFLY, SHUTOFF | | 3/5/2003 | HON AS R&O, ANNISTON AL | GENERAL ELECTRIC COM |
| 8 | 3290694-3 | VALVE, BUTTERFLY, SHUTOFF | | 3/5/2003 | HON AS R&O, ANNISTON AL | GENERAL ELECTRIC |
| 9 | 3290694-4 | VALVE  BTFLY SHUTOFF | | 5/9/2003 | HON AS R&O, ANNISTON AL | GE AVI MATER |
| 10 | 3290694-4 | VALVE  BTFLY SHUTOFF | | 7/21/2003 | HON AS R&O, ANNISTON AL | QATAR AIRWAYS |
| 11 | 3290694-4 | VALVE  BTFLY SHUTOFF | | 10/1/2003 | HON AS R&O, ANNISTON AL | GE AVI MATER |
| 12 | 3290694-4 | VALVE  BTFLY SHUTOFF | | 10/9/2003 | HON AS R&O, ANNISTON AL | GE AVI MATER |
| 13 | 3290694-4 | VALVE  BTFLY SHUTOFF | | 3/12/2004 | HON EAS, TEMPE AZ | AIRINMAR MAINTENANCE |
| 14 | 3290694-4 | VALVE  BTFLY SHUTOFF | | 6/30/2004 | HON EAS, TEMPE AZ | |
| 15 | 3290694-4 | VALVE  BTFLY SHUTOFF | | 7/7/2004 | HON EAS, TEMPE AZ | |
| 16 | 3290694-4 | VALVE  BTFLY SHUTOFF | | 7/8/2004 | HON EAS, TEMPE AZ | AIR FRANCE |
| 17 | 3290694-4 | VALVE  BTFLY SHUTOFF | | 12/6/2004 | HON EAS, TEMPE AZ | |
| 18 | 3290694-4 | VALVE  BTFLY SHUTOFF | | 4/8/2005 | HON EAS, TEMPE AZ | |
| 19 | 3290694-4 | VALVE  BTFLY SHUTOFF | | 11/7/2005 | HON AS R&O, ANNISTON AL | AIRINMAR MAINTENANCE, LTD. |
| 20 | 3290694-4 | VALVE  BTFLY SHUTOFF | | 2/28/2006 | HON AS R&O, ANNISTON AL | TAM LINHAS AEREAS |
| 21 | 3290694-4 | VALVE  BTFLY SHUTOFF | | 2/28/2006 | HON AS R&O, ANNISTON AL | TAM LINHAS AEREAS |
| 22 | 3290694-4 | VALVE  BTFLY SHUTOFF | | 3/6/2006 | HON AS R&O, ANNISTON AL | AIRINMAR MAINTENANCE, LTD. |
| 23 | 3290694-4 | VALVE  BTFLY SHUTOFF | | 3/6/2006 | HON AS R&O, ANNISTON AL | AIRINMAR MAINTENANCE, LTD. |
| 24 | 3290694-4 | VALVE  BTFLY SHUTOFF | | 3/21/2006 | HON AS R&O, ANNISTON AL | AIRINMAR MAINTENANCE, LTD. |
| 25 | 3290694-4 | VALVE  BTFLY SHUTOFF | | 4/9/2006 | HON AS R&O, ANNISTON AL | AIRINMAR MAINTENANCE, LTD. |
| 26 | 3290694-4 | VALVE  BTFLY SHUTOFF | | 6/9/2006 | HON AS R&O, ANNISTON AL | AIRINMAR MAINTENANCE, LTD. |
| 27 | 3290694-5 | VALVE  BTFLY SHUTOFF | | 6/20/2006 | HON AS R&O, ANNISTON AL | GARCO "BANK" ANNISTON |
| 28 | 3290694-4 | VALVE  BTFLY SHUTOFF | | 7/6/2006 | HON AS R&O, ANNISTON AL | GARCO "BANK" ANNISTON |
| 29 | 3290694-4 | VALVE  BTFLY SHUTOFF | | 8/3/2006 | HON AS R&O, ANNISTON AL | TAM LINHAS AEREAS |
| 30 | 3290694-4 | VALVE  BTFLY SHUTOFF | | 8/21/2006 | HON AS R&O, ANNISTON AL | AIRINMAR MAINTENANCE, LTD. |

KEYWORDSEARCH-ALL RETURNS / HITS~LEAK-OPEN /

*FIG. 34*

| | MICROSOFT EXCEL - KEYWORD_SEARCH RESULT[2] | | | | | | | | | _ ⊡ ☒ |
|---|---|---|---|---|---|---|---|---|---|---|
| | FILE | EDIT | VIEW | INSERT | FORMAT | TOOLS | DATA | WINDOW | FDA_Y | PIPS EXCEL TOOLS | HELP | TYPE A QUESTION FOR HELP ☐ _ ⊟ × |

O18 ▾ *fx*

| | O |
|---|---|
| 1 | WST_DESC |
| 2 | |
| 3 | |
| 4 | REPAIR/ESTIMATE AS NECESSARY TO HONEYWELL SPECIFICATIONS. PRODUCT SHALL CONFORM TO ALL FAA COMMERCIAL SPECIFICATIONS. COMPLY W... |
| 5 | UNIT WAS DISASSEMBLED, CLEANED, INSPECTED, REPAIRED, MODIFIED, TESTED AND RETURNED TO SERVICE IAW CMM. FAILURE ATTRIBUTED TO CONT... |
| 6 | INDUCTION TESTED AND FOUND OPENINGTIME FAILURE AND EXCESSIVE CURRENT DRAW. REPLACED ALL DIAPHRAGMS, SEALS, RINGS, SOLENOID, FILTER ... |
| 7 | INDUCTION TESTED AND FOUND OPENINGTIME FAILURE AND EXCESSIVE CURRENT DRAW. REPLACED ALL DIAPHRAGMS, SEALS, RINGS, SOLENOID, FILTER ... |
| 8 | UNIT WAS DISASSEMBLED, CLEANED, INSPECTED, REPAIRED, MODIFIED, TESTED AND RETURNED TO SERVICE IAW CMM. FAILURE ATTRIBUTED TO SEVE... |
| 9 | UNIT WAS DISASSEMBLED, CLEANED, INSPECTED, REPAIRED, MODIFIED, TESTED AND RETURNED TO SERVICE IAW CMM. FAILURE ATTRIBUTED TO SEVE... |
| 10 | INDUCTION TESTED AND FOUND BONDING RESISTANCE FAILURE. DISASSEMBLED 100% DUE TO MODIFICATION REQUIREMENTS AND OIL CONTAMINATION ... |
| 11 | OK TO PROCEED WITH REPAIR/MOD PER TIM WILSON. INDUCTION TESTED AND FOUND OIL CONTAMINATION AND BONDING FAILURE. REPLACED/MODIFIED ... |
| 12 | |
| 13 | |
| 14 | |
| 15 | |
| 16 | |
| 17 | |
| 18 | |
| 19 | |
| 20 | |
| 21 | |
| 22 | |
| 23 | |
| 24 | |
| 25 | |
| 26 | |
| 27 | |
| 28 | |
| 29 | |
| 30 | |

|◄ ◄ ► ►| \ KEYWORDSEARCH-ALL RETURNS \ HITS~LEAK-OPEN /

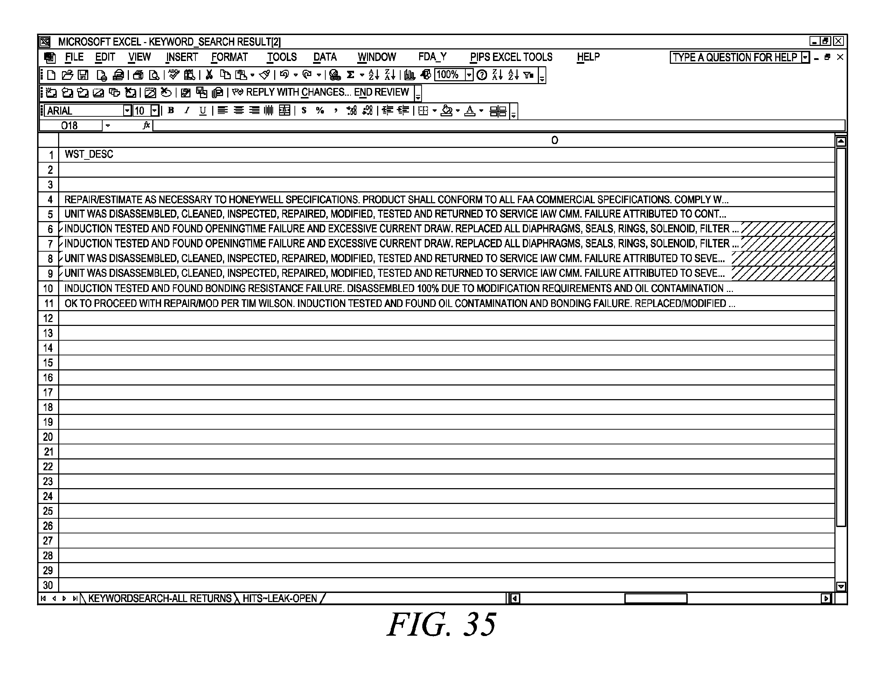

*FIG. 35*

Europäisches
Patentamt

European
Patent Office

Office européen
des brevets

**EUROPEAN SEARCH REPORT**

Application Number

EP 09 17 3186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | See, in addition to the notice of the President in OJ2007/11, the content of the search opinion.<br>----- | 1-9 | INV.<br>G06Q10/00 |

TECHNICAL FIELDS
SEARCHED     (IPC)

G06Q

The present search report has been drawn up for all claims

| Place of search | Date of completion of the search | Examiner |
|---|---|---|
| Munich | 23 December 2009 | Gardiner, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)